# EUROPEAN PATENT APPLICATION

(11) **EP 4 408 071 A1**
(43) Date of publication of application: **31.07.2024**
(21) Application number: 22882699.6
(22) Date of filing: 11.10.2022
(51) Int. Cl.: H04W 36/08

(54) **COMMUNICATION METHOD AND COMMUNICATION APPARATUS**

(30) Priority: 22.10.2021 CN 202111235026
(71) Applicant: Huawei Technologies Co., Ltd., Shenzhen, Guangdong 518129 (CN)
(72) Inventor: ZHENG, Wuyang, Shenzhen, Guangdong 518129 (CN); HU, Xingxing, Shenzhen, Guangdong 518129 (CN); GENG, Tingting, Shenzhen, Guangdong 518129 (CN)
(74) Representative: Pfenning, Meinig & Partner mbB
(86) International application number: PCT/CN2022/124689
(87) International publication number: WO 2023/066089

(57) **Abstract**

Embodiments of this application disclose a communication method and a communication apparatus. The communication method includes: A first access network device receives first indication information from a second access network device, where the first indication information indicates the first access network device to send a first reconfiguration message after or before the first access network device sends first candidate primary secondary cell information to the second access network device, and the first candidate primary secondary cell information indicates one or more first candidate primary secondary cells accepted by a third access network device in candidate primary secondary cells that the second access network device requests the third access network device to add; and the first access network device sends the first reconfiguration message to a terminal device based on the first indication information. This resolves a problem that the first access network device does not know whether to send the first reconfiguration message before sending the first candidate primary secondary cell information or send the first reconfiguration message after sending the first candidate primary secondary cell information, so that a CPC procedure can be normally performed.

## Description

This application claims priority to Chinese Patent Application No. 202111235026.0, filed with the China National Intellectual Property Administration on October 22, 2021 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

In a wireless network, one user equipment (user equipment, UE) may communicate with a plurality of base stations, which is referred to as dual-connectivity (dual-connectivity, DC), and is also referred to as multi-radio dual connectivity (multi-radio dual connectivity, MR-DC). A network side may provide a communication service for a same UE by using resources of the plurality of base stations, to provide high-rate transmission for the UE. In an MR-DC scenario, a base station that exchanges control plane signaling with a core network is referred to as a master node (master node, MN), and another base station is referred to as a secondary node (secondary node, SN). In the MR-DC scenario, a primary cell (primary cell, PCell) exists in the master node, and a primary secondary cell (primary secondary cell, PSCell) exists in a secondary node.

In the MR-DC scenario, due to mobility of the UE, the network side triggers a PSCell change (that is, the network side indicates the UE to hand over from one PSCell to another PSCell). For example, the UE may complete the PSCell change by performing a conditional primary secondary cell change (conditional PSCell change, CPC) procedure. However, in the MR-DC scenario, some CPC procedures cannot be normally performed.

### SUMMARY

Embodiments of this application disclose a communication method and a communication apparatus, so that a CPC procedure can be normally performed.

According to a first aspect, an embodiment of this application provides a communication method. The method includes: A first access network device receives first indication information from a second access network device, where the first indication information indicates the first access network device to send a first reconfiguration message after or before the first access network device sends first candidate primary secondary cell information to the second access network device, and the first candidate primary secondary cell information indicates one or more first candidate primary secondary cells accepted by a third access network device in candidate primary secondary cells that the second access network device requests the third access network device to add; and the first access network device sends the first reconfiguration message to a terminal device based on the first indication information, where the first reconfiguration message includes configuration information corresponding to the one or more first candidate primary secondary cells.

In this embodiment of this application, the first indication information indicates the first access network device to send the first reconfiguration message after or before the first access network device sends the first candidate primary secondary cell information to the second access network device. The first access network device sends the first reconfiguration message to the terminal device based on the first indication information. This resolves a problem that the first access network device does not know whether to send the first reconfiguration message before sending the first candidate primary secondary cell information or send the first reconfiguration message after sending the first candidate primary secondary cell information, so that a CPC procedure can be normally performed.

According to a second aspect, an embodiment of this application provides another communication method. The method includes: A second access network device sends first indication information to a first access network device, where the first indication information indicates the first access network device to send a first reconfiguration message after or before the first access network device sends first candidate primary secondary cell information to the second access network device, and the first candidate primary secondary cell information indicates one or more first candidate primary secondary cells accepted by a third access network device in candidate primary secondary cells that the second access network device requests the third access network device to add; and the second access network device receives the first candidate primary secondary cell information from the first access network device.

In this embodiment of this application, the first access network device sends the first indication information to the first access network device, where the first indication information indicates the first access network device to send the first reconfiguration message after or before the first access network device sends the first candidate primary secondary cell information to the second access network device. This resolves a problem that the first access network device does not know whether to send the first reconfiguration message before sending the first candidate primary secondary cell information or send the first reconfiguration message after sending the first candidate primary secondary cell information, so that a CPC procedure can be normally performed.

In a possible implementation of the first aspect or the second aspect, the first indication information includes an indication field.

The indication field indicates the first access network device to send the first reconfiguration message after the first access network device sends the first candidate primary secondary cell information to the second access network device, and the indication field further indicates the first access network device to send a second reconfiguration message after the first access network device sends second candidate primary secondary cell information to the second access network device; the second candidate primary secondary cell information indicates one or more second candidate primary secondary cells accepted by a fourth access network device in candidate primary secondary cells that the second access network device requests the fourth access network device to add; and the second reconfiguration message includes configuration information corresponding to the one or more second candidate primary secondary cells. Alternatively, the indication field indicates the first access network device to send the first reconfiguration message before the first access network device sends the first candidate primary secondary cell information to the second access network device, and the indication field further indicates the first access network device to send a second reconfiguration message before the first access network device sends second candidate primary secondary cell information to the second access network device; the second candidate primary secondary cell information indicates one or more second candidate primary secondary cells accepted by a fourth access network device in candidate primary secondary cells that the second access network device requests the fourth access network device to add; and the second reconfiguration message includes configuration information corresponding to the one or more second candidate primary secondary cells.

In this implementation, the indication field can indicate the first access network device to send the first reconfiguration message after the first access network device sends the first candidate primary secondary cell information to the second access network device, and can also indicate the first access network device to send the second reconfiguration message after the first access network device sends the second candidate primary secondary cell information to the second access network device. Alternatively, the indication field can indicate the first access network device to send the first reconfiguration message before the first access network device sends the first candidate primary secondary cell information to the second access network device, and can also indicate the first access network device to send the second reconfiguration message before the first access network device sends the second candidate primary secondary cell information to the second access network device. This reduces signaling overheads.

In a possible implementation of the first aspect or the second aspect, the first indication information includes an identity of the third access network device and/or identities of the one or more first candidate primary secondary cells.

In this implementation, the first indication information includes the identity of the third access network device and/or the identities of the one or more first candidate primary secondary cells, to indicate a sequence in which the first access network device sends the first reconfiguration message and the first candidate primary secondary cell information.

In a possible implementation of the first aspect or the second aspect, the first indication information includes an identity of the third access network device and/or identities of the one or more first candidate primary secondary cells; and the first indication information includes an identity of the fourth access network device and/or identities of the one or more second candidate primary secondary cells.

In this implementation, the first indication information further includes the identity of the fourth access network device and/or the identities of the one or more second candidate primary secondary cells. In this way, the first indication information can indicate a sequence in which the first access network device sends the first reconfiguration message and the first candidate primary secondary cell information, and can also indicate a sequence in which the first access network device sends the second reconfiguration message and the second candidate primary secondary cell information. Therefore, signaling overheads are low.

In a possible implementation of the first aspect or the second aspect, the first indication information includes a first field and a second field. The first field corresponds to an identity of the third access network device and/or identities of the one or more first candidate primary secondary cells; and the second field corresponds to an identity of the fourth access network device and/or identities of the one or more second candidate primary secondary cells. The first field indicates the first access network device to send the first reconfiguration message before or after the first access network device sends the first candidate primary secondary cell information to the second access network device. The second field indicates the first access network device to send a second reconfiguration message before or after the first access network device sends the second candidate primary secondary cell information to the second access network device. The second candidate primary secondary cell information indicates the one or more second candidate primary secondary cells; and the one or more second candidate primary secondary cells are one or more candidate primary secondary cells accepted by the fourth access network device in candidate primary secondary cells that the second access network device requests the fourth access network device to add. The second reconfiguration message includes configuration information corresponding to the one or more second candidate primary secondary cells.

In this implementation, the first indication information independently indicates a sequence in which the first access network device sends the first reconfiguration message and the first candidate primary secondary cell information and a sequence in which the first access network device sends the second reconfiguration message and the second candidate primary secondary cell information. The sequence in which the first access network device sends the first reconfiguration message and the first candidate primary secondary cell information and the sequence in which the first access network device sends the second reconfiguration message and the second candidate primary secondary cell information may be flexibly configured based on an actual requirement, so that signaling overheads are low.

In a possible implementation of the first aspect or the second aspect, the first indication information further includes the identity of the third access network device and/or the identities of the one or more first candidate primary secondary cells, and the identity of the fourth access network device and/or the identities of the one or more second candidate primary secondary cells.

In this implementation, the first indication information further includes the identity of the third access network device and/or the identities of the one or more first candidate primary secondary cells, and the identity of the fourth access network device and/or the identities of the one or more second candidate primary secondary cells, to accurately and quickly determine the identities that are of the one or more first candidate primary secondary cells and that correspond to the first field and the identities that are of the one or more second candidate primary secondary cells and that correspond to the second field.

In a possible implementation of the first aspect or the second aspect, the first indication information includes the identity of the third access network device.

In this implementation, the first indication information includes the identity of the third access network device, to indicate a sequence in which the first access network device sends the first candidate primary secondary cell information and the first reconfiguration message that correspond to the third access network device.

In a possible implementation of the first aspect or the second aspect, the third access network device is a candidate secondary node of the terminal device, and the first indication information does not include an identity of another candidate secondary node of the terminal device.

In this implementation, the first indication information includes only an identity of one candidate secondary node (namely, the third access network device) of the terminal device, to indicate a sequence in which the first access network device sends the first candidate primary secondary cell information and the first reconfiguration message that correspond to the third access network device, and occupy a small quantity of bits.

In a possible implementation of the first aspect or the second aspect, the first indication information includes a third field and a fourth field, the third field corresponds to the identities of the one or more first candidate primary secondary cells, and the fourth field corresponds to identities of one or more third candidate primary secondary cells. The third field indicates the first access network device to send the first reconfiguration message after the first access network device sends the first candidate primary secondary cell information to the second access network device. The fourth field indicates the first access network device to send a third reconfiguration message corresponding to the one or more third candidate primary secondary cells before the first access network device sends, to the second access network device, third candidate primary secondary cell information corresponding to the one or more third candidate primary secondary cells. The one or more third candidate primary secondary cells belong to one or more access network devices. The one or more access network devices include the third access network device and/or another access network device.

Optionally, the first indication information further includes the identities of the one or more first candidate primary secondary cells and the identities of the one or more third candidate primary secondary cells.

In this implementation, the third field indicates the first access network device to send the first reconfiguration message after the first access network device sends the first candidate primary secondary cell information to the second access network device; and the fourth field indicates the first access network device to send the third reconfiguration message corresponding to the one or more third candidate primary secondary cells before the first access network device sends, to the second access network device, the third candidate primary secondary cell information corresponding to the one or more third candidate primary secondary cells. It can be learned that the first indication information may independently indicate a sequence in which the first access network device sends candidate primary secondary cell information and a reconfiguration message that correspond to any candidate primary secondary cell, and signaling overheads are low.

In a possible implementation of the first aspect or the second aspect, the third field further corresponds to identities of one or more fourth candidate primary secondary cells; the third field further indicates the first access network device to send a fourth reconfiguration message corresponding to the one or more fourth candidate primary secondary cells after the first access network device sends, to the second access network device, fourth candidate primary secondary cell information corresponding to the one or more fourth candidate primary secondary cells; and the one or more fourth candidate primary secondary cells belong to one or more access network devices. Optionally, the one or more fourth candidate primary secondary cells belong to an access network device other than the third access network device.

In this implementation, the third field further indicates the first access network device to send the fourth reconfiguration message corresponding to the one or more fourth candidate primary secondary cells after the first access network device sends, to the second access network device, the fourth candidate primary secondary cell information corresponding to the one or more fourth candidate primary secondary cells. It can be learned that the third field may indicate a sequence in which the first access network device sends candidate primary secondary cell information and a reconfiguration message that correspond to a plurality of candidate primary secondary cells that belong to different access network devices. The fourth field may indicate a sequence in which the first access network device sends candidate primary secondary cell information and a reconfiguration message that correspond to a plurality of candidate primary secondary cells that belong to different access network devices. In other words, both the third field and the fourth field in the first indication information can indicate a sequence in which the first access network device sends candidate primary secondary cell information and a reconfiguration message that correspond to a plurality of candidate primary secondary cells that belong to different access network devices, and occupy a small quantity of bits.

In a possible implementation of the first aspect or the second aspect, the first indication information includes a third field and a fourth field, the third field corresponds to the identities of the one or more first candidate primary secondary cells, and the fourth field corresponds to identities of one or more third candidate primary secondary cells. The third field indicates the first access network device to send the first reconfiguration message before the first access network device sends the first candidate primary secondary cell information to the second access network device. The fourth field indicates the first access network device to send a third reconfiguration message corresponding to the one or more third candidate primary secondary cells after the first access network device sends, to the second access network device, third candidate primary secondary cell information corresponding to the one or more third candidate primary secondary cells. The one or more third candidate primary secondary cells correspond to one or more access network devices.

Optionally, the first indication information further includes the identities of the one or more first candidate primary secondary cells and the identities of the one or more third candidate primary secondary cells.

In this implementation, the third field indicates the first access network device to send the first reconfiguration message before the first access network device sends the first candidate primary secondary cell information to the second access network device; and the fourth field indicates the first access network device to send the third reconfiguration message corresponding to the one or more third candidate primary secondary cells after the first access network device sends, to the second access network device, the third candidate primary secondary cell information corresponding to the one or more third candidate primary secondary cells. It can be learned that the first indication information may independently indicate a sequence in which the first access network device sends candidate primary secondary cell information and a reconfiguration message that correspond to any candidate primary secondary cell, and signaling overheads are low.

In a possible implementation of the first aspect or the second aspect, the third field further corresponds to identities of one or more fourth candidate primary secondary cells; the third field further indicates the first access network device to send a fourth reconfiguration message corresponding to the one or more fourth candidate primary secondary cells before the first access network device sends, to the second access network device, fourth candidate primary secondary cell information corresponding to the one or more fourth candidate primary secondary cells; and the one or more fourth candidate primary secondary cells belong to one or more access network devices.

In this implementation, both the third field and the fourth field in the first indication information can indicate a sequence in which the first access network device sends candidate primary secondary cell information and a reconfiguration message that correspond to a plurality of candidate primary secondary cells that belong to different access network devices, and occupy a small quantity of bits.

In a possible implementation of the first aspect or the second aspect, the first candidate primary secondary cell information indicates one first candidate primary secondary cell accepted by the third access network device in the candidate primary secondary cells that the second access network device requests the third access network device to add. The first reconfiguration message includes configuration information corresponding to the one first candidate primary secondary cell. The first indication information includes a fifth field and an identity that is of the one first candidate primary secondary cell and that corresponds to the fifth field. The fifth field indicates the first access network device to send the first reconfiguration message before or after the first access network device sends the first candidate primary secondary cell information to the second access network device.

In this implementation, the fifth field indicates the first access network device to send the first reconfiguration message before or after the first access network device sends the first candidate primary secondary cell information to the second access network device, so that flexibility is high.

In a possible implementation of the first aspect or the second aspect, the first indication information further includes a sixth field, and the sixth field corresponds to an identity of one sixth candidate primary secondary cell. The sixth field indicates the first access network device to send a sixth reconfiguration message before or after the first access network device sends sixth candidate primary secondary cell information to the second access network device. The sixth candidate primary secondary cell information indicates a candidate primary secondary cell that is accepted by a sixth access network device and that is in candidate primary secondary cells that the second access network device requests the sixth access network device to add. The sixth reconfiguration message includes configuration information of the sixth candidate primary secondary cell.

In this implementation, the first indication information may independently indicate a sequence in which the first access network device sends, to the second access network device, a reconfiguration message and candidate primary secondary cell information that correspond to each candidate primary secondary cell, so that flexibility is high, and signaling overheads are low.

In a possible implementation of the first aspect or the second aspect, the first indication information further includes the identity of the third access network device, and the identities of the one or more first candidate primary secondary cells correspond to the identity of the third access network device.

In this implementation, the first indication information further includes the identity of the third access network device, and the identities of the one or more first candidate primary secondary cells correspond to the identity of the third access network device. In this way, the first access network device may determine the one or more first candidate primary secondary cells based on the identity of the third access network device and the identities of the one or more first candidate primary secondary cells, and the identities of the one or more first candidate primary secondary cells may occupy a small quantity of bits.

In a possible implementation of the first aspect or the second aspect, the first indication information is included in a secondary node change required message.

In this implementation, the first indication information is included in the secondary node change required message, and the first indication information does not need to be additionally carried by using other signaling. Therefore, signaling overheads are low.

In a possible implementation of the first aspect, the method further includes: When receiving no second indication information from the second access network device, the first access network device sends a fifth reconfiguration message to the terminal device based on the received first indication information, where the second indication information indicates the first access network device to send the fifth reconfiguration message after or before the first access network device sends fifth candidate primary secondary cell information to the second access network device; the fifth candidate primary secondary cell information indicates one or more fifth candidate primary secondary cells accepted by a fifth access network device in candidate primary secondary cells that the second access network device requests the fifth access network device to add; and the fifth reconfiguration message includes configuration information corresponding to the one or more fifth candidate primary secondary cells.

In this implementation, when receiving no second indication information from the second access network device, the first access network device sends, based on the received first indication information, the fifth reconfiguration message to the terminal device. In other words, if the first access network device does not receive new indication information (the second indication information), the first access network device may send the fifth reconfiguration message to the terminal device based on the received first indication information. In this way, a quantity of times of sending indication information can be reduced, and further, it can be indicated that a sequence of sending the fifth reconfiguration information and the fifth candidate primary secondary cell information is quickly determined.

In a possible implementation of the first aspect or the second aspect, the first access network device is a master node of the terminal device, the second access network device is a source secondary node of the terminal device, and the third access network device is a candidate secondary node of the terminal device.

According to a third aspect, an embodiment of this application provides another communication method. The method includes: A terminal device accesses a target primary cell of a first access network device; and the terminal device sends first indication information to the first access network device when the terminal device does not trigger a conditional primary secondary cell addition and change (Conditional PSCell Addition and Change, CPAC), where the first indication information is used to determine a reason for which the terminal device does not trigger the CPAC.

In this embodiment of this application, the terminal device sends the first indication information to the first access network device when the terminal device does not trigger the CPAC, so that the first access network device determines a reason for which the terminal device does not trigger the CPAC. The first indication information may enable the first access network device to learn more detailed information about why the CPAC is not triggered.

In a possible implementation, the method further includes: The terminal device sends a measurement report to the first access network device, where the measurement report is used by the first access network device to update a CPAC configuration.

In this implementation, the terminal device sends the measurement report to the first access network device, so that the first access network device updates the CPAC configuration based on the measurement report.

In a possible implementation, the measurement report is related to each candidate primary secondary cell corresponding to the target primary cell. For example, the measurement report is a measurement report related to each candidate primary secondary cell corresponding to the target primary cell.

In this implementation, the measurement report is related to each candidate primary secondary cell corresponding to the target primary cell, so that the first access network device learns, based on the measurement report, a status of each candidate primary secondary cell corresponding to the target primary cell.

In a possible implementation, the measurement report includes a target parameter of each candidate primary secondary cell corresponding to the target primary cell. The target parameter includes one or more of the following: reference signal received power (reference signal received power, RSRP), reference signal received quality (reference signal received quality, RSRQ), and a signal to interference plus noise ratio (signal to interference plus noise ratio, SINR).

In this implementation, the measurement report includes the target parameter of each candidate primary secondary cell corresponding to the target primary cell, so that the first access network device optimizes the CPAC configuration based on the target parameter.

In a possible implementation, the target parameter is obtained by the terminal device through measurement when the terminal device determines whether a CPAC trigger condition is met.

In this implementation, the target parameter is obtained by the terminal device through measurement when the terminal device determines whether the CPAC trigger condition is met, so that the first access network device determines, based on the target parameter, the reason for which the CPAC is not triggered.

According to a fourth aspect, an embodiment of this application provides another communication method. The method includes: A first access network device receives first indication information from a terminal device; and the first access network device determines, based on the first indication information, a reason for which the terminal device does not trigger a CPAC.

In this embodiment of this application, the first access network device determines, based on the first indication information, a reason for which the terminal device does not trigger the CPAC, and further, the first access network device optimizes the CPAC configuration. The first indication information may enable the first access network device to learn more detailed information about why the CPAC is not triggered.

In a possible implementation, the method further includes: The first access network device receives a measurement report from the terminal device, where the measurement report is used by the first access network device to update a CPAC configuration.

In this implementation, the first access network device updates the CPAC configuration based on the measurement report.

In a possible implementation, the measurement report is related to each candidate primary secondary cell corresponding to the target primary cell. For example, the measurement report is a measurement report related to each candidate primary secondary cell corresponding to the target primary cell.

In this implementation, the measurement report is related to each candidate primary secondary cell corresponding to the target primary cell, so that the first access network device learns, based on the measurement report, a status of each candidate primary secondary cell corresponding to the target primary cell.

In a possible implementation, the measurement report includes a target parameter of each candidate primary secondary cell corresponding to the target primary cell: RSRP, RSRQ, and an SINR.

In this implementation, the measurement report includes the target parameter of each candidate primary secondary cell corresponding to the target primary cell, so that the first access network device optimizes the CPAC configuration based on the target parameter.

In a possible implementation, the target parameter is obtained by the terminal device through measurement when the terminal device determines whether a CPAC trigger condition is met.

In this implementation, the target parameter is obtained by the terminal device through measurement when the terminal device determines whether the CPAC trigger condition is met, so that the first access network device determines, based on the target parameter, the reason for which the CPAC is not triggered.

In a possible implementation of the third aspect or the fourth aspect, the first indication information indicates that the terminal device has measured all candidate primary secondary cells corresponding to the target primary cell, and none of the candidate primary secondary cells corresponding to the target primary cell meets the CPAC trigger condition.

In this implementation, the first indication information may enable the first access network device to learn that a reason for which the terminal device does not trigger the CPAC is that the terminal device has measured all the candidate primary secondary cells corresponding to the target primary cell, but none of the candidate primary secondary cells corresponding to the target primary cell meets the CPAC trigger condition.

In a possible implementation of the third aspect or the fourth aspect, the first indication information indicates that the terminal device fails to measure a candidate primary secondary cell corresponding to the target primary cell.

In this implementation, the first indication information may enable the first access network device to learn that a reason for which the terminal device does not trigger the CPAC is that the terminal device fails to measure the candidate primary secondary cell corresponding to the target primary cell.

In a possible implementation of the third aspect or the fourth aspect, the first indication information indicates that the terminal device has measured some candidate primary secondary cells corresponding to the target primary cell, and none of the candidate primary secondary cells that have been measured by the terminal device meets the CPAC trigger condition.

In this implementation, the first indication information may enable the first access network device to learn that a reason for which the terminal device does not trigger the CPAC is that the terminal device has measured some candidate primary secondary cells corresponding to the target primary cell, but none of the candidate primary secondary cells that have been measured by the terminal device meets the CPAC trigger condition.

In a possible implementation of the third aspect or the fourth aspect, the first indication information indicates a measurement status of each candidate primary secondary cell corresponding to the target primary cell, and indicates that none of candidate primary secondary cells that have been measured by the terminal device meets the CPAC trigger condition.

In this implementation, the first indication information may enable the first access network device to learn of the measurement status of each candidate primary secondary cell corresponding to the target primary cell.

In a possible implementation of the third aspect or the fourth aspect, the first indication information indicates candidate primary secondary cells measured by the terminal device in the candidate primary secondary cells corresponding to the target primary cell, and indicates that none of the candidate primary secondary cells that have been measured by the terminal device meets the CPAC trigger condition.

In this implementation, the first indication information may enable the first access network device to learn of the candidate primary secondary cells measured by the terminal device in the candidate primary secondary cells corresponding to the target primary cell, and to learn that none of the candidate primary secondary cells that have been measured by the terminal device meets the CPAC trigger condition.

According to a fifth aspect, an embodiment of this application provides another communication method. The method includes: A terminal device accesses a target primary cell of a first access network device; and the terminal device sends a measurement report to the first access network device when the terminal device does not trigger a conditional primary secondary cell addition and change CPAC, where the measurement report is used by the first access network device to update a CPAC configuration.

In this embodiment of this application, the terminal device sends the measurement report to the first access network device when the terminal device does not trigger the CPAC, so that the first access network device updates the CPAC configuration based on the measurement report.

In a possible implementation, the first indication information is sent by the terminal device to the first access network device when the terminal device does not trigger the CPAC.

In a possible implementation, the measurement report is related to each candidate primary secondary cell corresponding to the target primary cell.

In a possible implementation, the measurement report includes a target parameter of each candidate primary secondary cell corresponding to the target primary cell. The target parameter includes one or more of the following: RSRP, RSRQ, and an SINR.

In a possible implementation, the target parameter is obtained by the terminal device through measurement when the terminal device determines whether a CPAC trigger condition is met.

According to a sixth aspect, an embodiment of this application provides another communication method. The method includes: A first access network device receives a measurement report from a terminal device; and the first access network device updates a CPAC configuration based on the measurement report.

In this embodiment of this application, the first access network device updates the CPAC configuration based on the measurement report. The CPAC configuration is updated, to better implement a primary secondary cell handover of the terminal device, and improve communication quality of the terminal device.

In a possible implementation, the measurement report includes a target parameter of each candidate primary secondary cell corresponding to the target primary cell that is accessed by the terminal device. The target parameter includes one or more of the following: RSRP, RSRQ, and an SINR.

In a possible implementation, the target parameter is obtained by the terminal device through measurement when the terminal device determines whether a CPAC trigger condition is met.

In a possible implementation, that the first access network device updates a CPAC configuration based on the measurement report includes: updating, based on the measurement report, a CPAC trigger threshold or each candidate primary secondary cell corresponding to the target primary cell.

In this implementation, the CPAC trigger threshold or each candidate primary secondary cell corresponding to the target primary cell is updated based on the measurement report, so that the terminal device accesses a primary secondary cell that can provide a better communication service for the terminal device.

According to a seventh aspect, an embodiment of this application provides a communication apparatus. The communication apparatus has a function of implementing actions in the method embodiment in the first aspect. The function may be implemented by hardware, or may be implemented by hardware executing corresponding software. The hardware or software includes one or more modules or units that correspond to the foregoing function. In a possible implementation, the communication apparatus includes a transceiver module and a processing module. The transceiver module is configured to receive first indication information from a second access network device, where the first indication information indicates the first access network device to send a first reconfiguration message after or before the first access network device sends first candidate primary secondary cell information to the second access network device, and the first candidate primary secondary cell information indicates one or more first candidate primary secondary cells accepted by a third access network device in candidate primary secondary cells that the second access network device requests the third access network device to add. The processing module is configured to control, based on the first indication information, the transceiver module to send the first reconfiguration message to a terminal device, where the first reconfiguration message includes configuration information corresponding to the one or more first candidate primary secondary cells.

In a possible implementation, when receiving no second indication information from the second access network device, the processing module is further configured to control, based on the received first indication information, the transceiver module to send a fifth reconfiguration message to the terminal device, where the second indication information indicates the first access network device to send the fifth reconfiguration message after or before the first access network device sends fifth candidate primary secondary cell information to the second access network device; the fifth candidate primary secondary cell information indicates one or more fifth candidate primary secondary cells accepted by a fifth access network device in candidate primary secondary cells that the second access network device requests the fifth access network device to add; and the fifth reconfiguration message includes configuration information corresponding to the one or more fifth candidate primary secondary cells.

According to an eighth aspect, an embodiment of this application provides a communication apparatus. The communication apparatus has a function of implementing actions in the method embodiment in the second aspect. The function may be implemented by hardware, or may be implemented by hardware executing corresponding software. The hardware or software includes one or more modules or units that correspond to the foregoing function. In a possible implementation, the communication apparatus includes a transceiver module. The transceiver module is configured to send first indication information to a first access network device, where the first indication information indicates the first access network device to send a first reconfiguration message after or before the first access network device sends first candidate primary secondary cell information to a second access network device, and the first candidate primary secondary cell information indicates one or more first candidate primary secondary cells accepted by a third access network device in candidate primary secondary cells that the second access network device requests the third access network device to add. The transceiver module is further configured to receive the first candidate primary secondary cell information from the first access network device.

For technical effects brought by the possible implementations of the seventh aspect or the eighth aspect, refer to descriptions of technical effects of the first aspect or the possible implementations of the first aspect.

According to a ninth aspect, an embodiment of this application provides a communication apparatus. The communication apparatus has a function of implementing actions in the method embodiment in the third aspect. The function may be implemented by hardware, or may be implemented by hardware executing corresponding software. The hardware or software includes one or more modules or units that correspond to the foregoing function. In a possible implementation, the communication apparatus includes a processing module and a transceiver module. The processing module is configured to control a terminal device to access a target primary cell of a first access network device. The transceiver module is further configured to: when a CPAC is not triggered, send first indication information to the first access network device, where the first indication information is used to determine a reason for which the terminal device does not trigger the CPAC.

In a possible implementation, the transceiver module is further configured to send a measurement report to the first access network device, where the measurement report is used by the first access network device to update a CPAC configuration.

According to a tenth aspect, an embodiment of this application provides a communication apparatus. The communication apparatus has a function of implementing actions in the method embodiment in the fourth aspect. The function may be implemented by hardware, or may be implemented by hardware executing corresponding software. The hardware or software includes one or more modules or units that correspond to the foregoing function. In a possible implementation, the communication apparatus includes a transceiver module and a processing module. The transceiver module is configured to receive first indication information from a terminal device. The processing module is configured to determine, based on the first indication information, a reason for which the terminal device does not trigger a CPAC.

In a possible implementation, the first indication information is sent by the terminal device to the first access network device when the terminal device does not trigger the CPAC.

In a possible implementation, the transceiver module is further configured to receive a measurement report from the terminal device, where the measurement report is used by the first access network device to update a CPAC configuration.

For technical effects brought by the possible implementations of the ninth aspect or the tenth aspect, refer to descriptions of technical effects of the third aspect or the possible implementations of the third aspect.

According to an eleventh aspect, an embodiment of this application provides a communication apparatus. The communication apparatus has a function of implementing actions in the method embodiment in the fifth aspect. The function may be implemented by hardware, or may be implemented by hardware executing corresponding software. The hardware or software includes one or more modules or units that correspond to the foregoing function. In a possible implementation, the communication apparatus includes a processing module and a transceiver module. The processing module is configured to control a terminal device to access a target primary cell of a first access network device. The transceiver module is configured to: when the terminal device does not trigger a CPAC, send a measurement report to the first access network device, where the measurement report is used by the first access network device to update a CPAC configuration.

In a possible implementation, the first indication information is sent by the terminal device to the first access network device when the terminal device does not trigger the CPAC.

For technical effects brought by the eleventh aspect or the possible implementations of the eleventh aspect, refer to descriptions of technical effects of the fifth aspect or the possible implementations of the fifth aspect.

According to a twelfth aspect, an embodiment of this application provides a communication apparatus. The communication apparatus has a function of implementing actions in the method embodiment in the sixth aspect. The function may be implemented by hardware, or may be implemented by hardware executing corresponding software. The hardware or software includes one or more modules or units that correspond to the foregoing function. In a possible implementation, the communication apparatus includes a transceiver module and a processing module. The transceiver module is configured to receive a measurement report from a terminal device. The processing module is configured to update a CPAC configuration based on the measurement report.

In a possible implementation, the processing module is specifically configured to update, based on the measurement report, a CPAC trigger threshold or each candidate primary secondary cell corresponding to a target primary cell.

For technical effects brought by the twelfth aspect or the possible implementations of the twelfth aspect, refer to descriptions of technical effects of the sixth aspect or the possible implementations of the sixth aspect.

According to a thirteenth aspect, this application provides a communication apparatus. The communication apparatus includes a processor, and the processor may be configured to execute computer-executable instructions stored in a memory, so that the method according to any one of the first aspect or the possible implementations of the first aspect is performed, or the method according to any one of the second aspect or the possible implementations of the second aspect is performed, or the method according to any one of the third aspect or the possible implementations of the third aspect is performed, or the method according to any one of the fourth aspect or the possible implementations of the fourth aspect is performed, or the method according to any one of the fifth aspect or the possible implementations of the fifth aspect is performed, or the method according to any one of the sixth aspect or the possible implementations of the sixth aspect is performed.

In this embodiment of this application, in a process of performing the foregoing method, a process of sending information in the foregoing method may be understood as a process of outputting information based on instructions of the processor. When the information is output, the processor outputs the information to a transceiver, so that the transceiver transmits the information. After the information is output by the processor, the information may further require other processing, and then reaches the transceiver. Similarly, when the processor receives input information, the transceiver receives the information, and inputs the information into the processor. Further, after the transceiver receives the information, other processing may need to be performed on the information before the information is input into the processor.

An operation like sending and/or receiving involved in the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor, that executes computer instructions in a memory to perform these methods. For example, the processor may be further configured to execute a program stored in the memory. When the program is executed, the communication apparatus is enabled to perform the method shown in the first aspect or any possible implementation of the first aspect. In a possible implementation, the memory is located outside the communication apparatus. In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive a packet, send a packet, or the like.

According to a fourteenth aspect, this application provides a data processing apparatus, where the data processing apparatus includes a processing circuit and an interface circuit. The interface circuit is configured to obtain data or output data. The processing circuit is configured to perform the corresponding method according to any one of the first aspect or the possible implementations of the first aspect, or the processing circuit is configured to perform the corresponding method according to any one of the second aspect or the possible implementations of the second aspect, or the processing circuit is configured to perform the corresponding method according to any one of the third aspect or the possible implementations of the third aspect, or the processing circuit is configured to perform the corresponding method according to any one of the fourth aspect or the possible implementations of the fourth aspect, or the processing circuit is configured to perform the corresponding method according to any one of the fifth aspect or the possible implementations of the fifth aspect, or the processing circuit is configured to perform the corresponding method according to any one of the sixth aspect or the possible implementations of the sixth aspect.

According to a fifteenth aspect, this application provides a computer-readable storage medium, where the computer-readable storage medium is used to store a computer program. When the computer program is run on a computer, the method according to any one of the first aspect or the possible implementations of the first aspect is performed, or the method according to any one of the second aspect or the possible implementations of the second aspect is performed, or the method according to any one of the third aspect or the possible implementations of the third aspect is performed, or the method according to any one of the fourth aspect or the possible implementations of the fourth aspect is performed, or the method according to any one of the fifth aspect or the possible implementations of the fifth aspect is performed, or the method according to any one of the sixth aspect or the possible implementations of the sixth aspect is performed.

According to a sixteenth aspect, this application provides a computer program product, where the computer program product includes a computer program or computer code. When the computer program product runs on a computer, the method according to any one of the first aspect or the possible implementations of the first aspect is performed, or the method according to any one of the second aspect or the possible implementations of the second aspect is performed, or the method according to any one of the third aspect or the possible implementations of the third aspect is performed, or the method according to any one of the fourth aspect or the possible implementations of the fourth aspect is performed, or the method according to any one of the fifth aspect or the possible implementations of the fifth aspect is performed, or the method according to any one of the sixth aspect or the possible implementations of the sixth aspect is performed.

According to a seventeenth aspect, this application provides a communication system, including the first access network device according to any one of the seventh aspect or the possible implementations of the seventh aspect and the second access network device according to any one of the eighth aspect or the possible implementations of the eighth aspect.

### BRIEF DESCRIPTION OF DRAWINGS

To describe the technical solutions in embodiments of this application or in the background more clearly, the following describes the accompanying drawings required for describing embodiments of this application or the background.
FIG. 1 is a schematic diagram of an architecture of an MR-DC scenario according to an embodiment of this application;
FIG. 2 shows an example of a protocol stack and a network element module on a base station side according to an embodiment of this application;
FIG. 3 is a schematic diagram of concepts of various cells in dual connectivity according to an embodiment of this application;
FIG. 4 is a flowchart of a communication method according to an embodiment of this application;
FIG. 5 shows an example of first indication information according to an embodiment of this application;
FIG. 6A shows an example of another piece of first indication information according to an embodiment of this application;
FIG. 6B shows an example of another piece of first indication information according to an embodiment of this application;
FIG. 7 is a flowchart of another communication method according to an embodiment of this application;
FIG. 8 is a flowchart of another communication method according to an embodiment of this application;
FIG. 9 is a flowchart of another communication method according to an embodiment of this application;
FIG. 10 is a flowchart of another communication method according to an embodiment of this application;
FIG. 11 is a flowchart of another communication method according to an embodiment of this application;
FIG. 12 is a flowchart of another communication method according to an embodiment of this application;
FIG. 13 is a flowchart of another communication method according to an embodiment of this application;
FIG. 14 is a flowchart of another communication method according to an embodiment of this application;
FIG. 15 is a flowchart of another communication method according to an embodiment of this application;
FIG. 16 is a flowchart of another communication method according to an embodiment of this application;
FIG. 17 is a flowchart of another communication method according to an embodiment of this application;
FIG. 18 is a schematic diagram of a structure of a communication apparatus 1800;
FIG. 19 is a schematic diagram of a structure of another communication apparatus 190 according to an embodiment of this application; and
FIG. 20 is a schematic diagram of a structure of another communication apparatus 200 according to an embodiment of this application.

### DESCRIPTION OF EMBODIMENTS

Terms "first", "second", and the like in the specification, claims, and accompanying drawings of this application are merely used to distinguish between different objects, and are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"An embodiment" mentioned in this specification indicates that a particular characteristic, structure or feature described with reference to this embodiment may be included in at least one embodiment of this application. The phrase appearing at different locations in this specification does not necessarily refer to a same embodiment, and is not an independent or alternative embodiment exclusive of another embodiment. It may be understood explicitly and implicitly by a person skilled in the art that embodiments described in this specification may be combined with other embodiments.

Terms used in the following embodiments of this application are merely intended to describe specific embodiments, but are not intended to limit this application. Terms "one", "a", "the", "the forgoing", "this", and "the one" of singular forms used in this specification and the appended claims of this application are also intended to include plural forms, unless otherwise specified in the context clearly. It should be further understood that the term "and/or" used in this application refers to and includes any or all possible combinations of one or more of the listed items. For example, "A and/or B" may represent three cases: Only A exists, only B exists, and both A and B exist, where A and B may be singular or plural. The term "a plurality of used in this application means two or more.

The following describes a network architecture in this application in detail.

The technical solutions provided in this application may be applied to various communication systems such as a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 4th generation (4th generation, 4G) communication system, a non-terrestrial network (non-terrestrial network, NTN) system, a 5th generation (5th generation, 5G) communication system or a new radio (new radio, NR) system, and other future communication systems such as a 6G system. The following describes the technical solutions provided in this application by using an MR-DC scenario in the 5G communication system as an example.

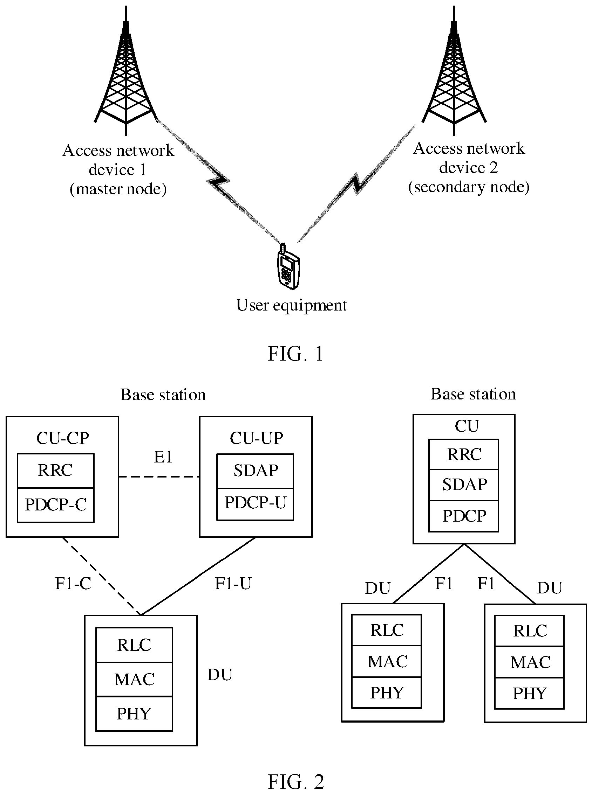

FIG. 1 is a schematic diagram of an architecture of an MR-DC scenario according to an embodiment of this application. As shown in FIG. 1, the communication system includes one or more user equipments. In FIG. 1, only one user equipment is used as an example, and one or more access network devices (for example, base stations) that can provide a communication service for the user equipment are used. In FIG. 1, only one access network device 1 (a master node of a terminal device) and one access network device 2 (a secondary node of the terminal device) are used as examples.

User equipment (user equipment, UE) is a device having a wireless transceiver function. The user equipment may communicate with one or more core network (core network, CN) devices (or referred to as core devices) through an access network device (or referred to as an access device) in a radio access network (radio access network, RAN). The user equipment may be deployed on land, and include indoor user equipment, outdoor user equipment, handheld user equipment, or vehicle-mounted user equipment; or may be deployed on a water surface (for example, on a ship); or may be deployed in the air (for example, on an airplane, a balloon, or a satellite). In embodiments of this application, the UE may alternatively be referred to as a terminal device, and may be a mobile phone (mobile phone), a tablet computer (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in a remote medical (remote medical) application, a wireless terminal device in a smart grid (smart grid), a wireless terminal in transportation safety (transportation safety), a wireless terminal device in a smart city (smart city), a wireless terminal in a smart home (smart home), or the like. Optionally, the user equipment may be a handheld device with a wireless communication function, a vehicle-mounted device, a wearable device, a terminal in the internet of things or internet of vehicles, a terminal in any form in a 5G network or a future network, or the like. This is not limited in this application. The access network device may be any device that has a wireless transceiver function and can communicate with the user equipment, for example, a radio access network (radio access network, RAN) node that connects the user equipment to a wireless network. Currently, examples of some RAN nodes include a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a base band unit (base band unit, BBU), a wireless fidelity (wireless fidelity, Wi-Fi) access point (access point, AP), integrated access and backhaul (integrated access and backhaul, IAB), or the like. In this application, an example in which a base station is used as an access network device is used for description.

FIG. 2 shows an example of a protocol stack and a network element module on a base station side according to an embodiment of this application. As shown in FIG. 2, a base station may include a CU and a DU. One CU may be connected to one DU, or a plurality of DUs may share one CU. CU-DU division may be performed based on a protocol stack. In a possible manner, a radio resource control (radio resource control, RRC) layer, a service data adaptation protocol (service data adaptation protocol, SDAP) layer, and a packet data convergence protocol (packet data convergence protocol, PDCP) layer are deployed in the CU, and a radio link control (radio link control, RLC) layer, a media access control (media access control, MAC) layer, and a physical layer (physical layer, PHY) are deployed in the DU. As shown in FIG. 2, in a possible network structure, a central unit CU node may be divided into a control plane (CU-CP) and a user plane (CU-UP). The CU-CP is responsible for a control plane (control plane) function, and mainly includes radio resource control (radio resource control, RRC) and a packet data convergence protocol (packet data convergence protocol, PDCP)-C. The PDCP-C is mainly responsible for data encryption and decryption, integrity protection, data transmission, and the like on the control plane. The CU-UP is responsible for a user plane (user plane) function, and mainly includes a service data adaptation protocol (service data adaptation protocol, SDAP) and a PDCP-U. The SDAP is mainly responsible for processing data of a core network and mapping a flow (flow) to a bearer. PDCP-U is mainly responsible for data plane encryption and decryption, integrity protection, header compression, sequence number maintenance, data transmission, and the like. The CU-CP and the CU-UP are connected through an E1 interface. The CU-CP indicates that a CU is connected to a core network through an Ng interface. The CU-CP is connected to the DU through F1-C (control plane). The CU-UP is connected to the DU through F1-U (user plane). Certainly, in another possible implementation, the PDCP-C is alternatively in the CU-UP.

To describe the technical solutions provided in embodiments of this application more clearly, the following first describes some technical features in embodiments of this application.

### MR-DC:

The MR-DC includes various forms, for example, evolved universal terrestrial radio access and new radio dual connectivity (E-UTRA NR dual connectivity, EN-DC), next-generation radio access technology and evolved universal terrestrial radio access dual connectivity (next generation-RAN E-UTRA dual connectivity, NGEN-DC), new radio and evolved universal terrestrial radio access dual connectivity (NR E-UTRA dual connectivity, NE-DC), and new radio dual connectivity (NR dual connectivity, NR-DC). In the EN-DC, a master node is a long term evolution (long term evolution, LTE) base station connected to an evolved packet core (evolved packet core, EPC) network of the 4th generation (the 4th generation, 4G) mobile communication technology, and a secondary node is an NR base station. In the NGEN-DC, a master node is an LTE base station ng-eNB connected to a 5th generation core (5th generation core, 5GC) network of the 5th generation (5th generation, 5G) mobile communication technology, and a secondary node is an NR base station. In the NE-DC, a master node is an NR base station connected to the 5GC, and a secondary node is an LTE base station. In the NR-DC, a master node is an NR base station connected to the 5GC, and a secondary node is an NR base station.

For UE in the MR-DC, the SN may have a user plane connection to a core network connected to the MN. In other words, in a downlink direction, the core network connected to the MN may directly send data to the UE by using the secondary node; and in an uplink direction, the UE may directly send, by using the SN, data to the core network connected to the MN. In addition, in addition to establishing a control plane connection, there may be a user plane connection between the MN and the core network.

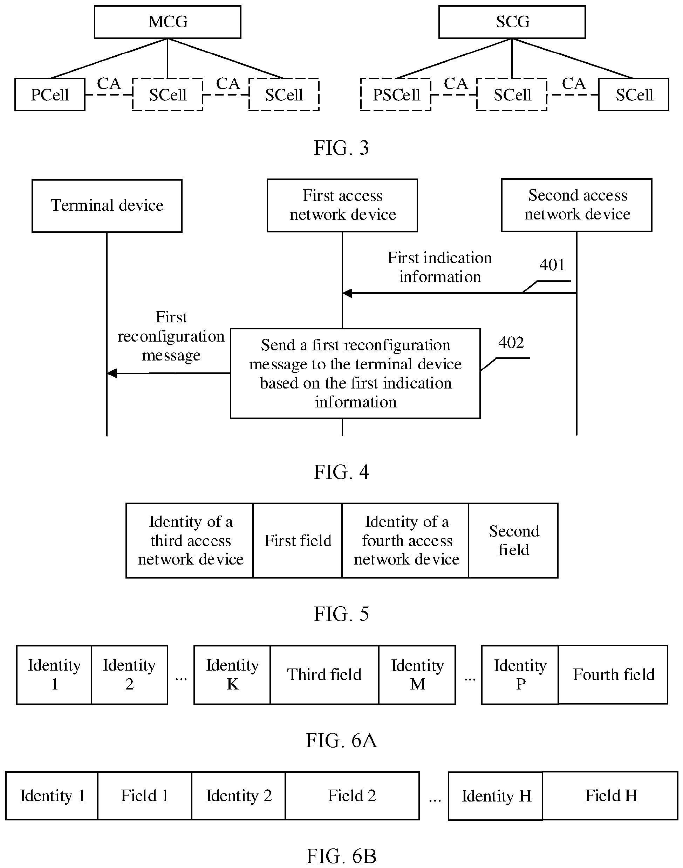

The UE may simultaneously receive services of a plurality of cells served by one base station. Therefore, a serving cell group provided by the MN for the UE may also be referred to as a master cell group (master cell group), MCG for short. Similarly, a serving cell group provided by the SN for the UE is referred to as a secondary cell group (secondary cell group), SCG for short. The MCG and the SCG each include at least one cell (cell). When there is only one cell in the MCG, the cell is a PCell of the UE. When there is only one cell in the SCG, the cell is a PSCell of the UE. The primary cell is a cell that is deployed at a dominant frequency and in which the UE initiates an initial connection establishment process or a connection reestablishment process, or a cell indicated as a primary cell in a handover process. The primary secondary cell is a cell in which the UE initiates a random access process in the secondary node, or a cell in which the UE does not perform a random access process and initiates data transmission in a secondary node change process, or a cell in which random access is initiated in a process of performing synchronous reconfiguration. To normalize various nouns in NR, a PCell and a PSCell are collectively referred to as a special cell (special cell), namely, SpCell. When there are a plurality of cells in the MCG or the SCG, a cell other than an SpCell is referred to as a secondary cell (secondary cell), namely, an SCell. In this case, an SCell and an SpCell in each cell group perform carrier aggregation (carrier aggregation, CA), to jointly provide transmission resources for the UE. The UE may perform uplink and downlink communication by simultaneously using a plurality of cells (carriers), to support high-speed data transmission. FIG. 3 is a schematic diagram of concepts of various cells in dual connectivity according to an embodiment of this application. As shown in FIG. 3, an SCell and an SpCell perform carrier aggregation.

### Conditional handover (conditional handover, CHO):

A source base station sends CHO configuration information to the UE when source link quality is good. Specifically, the source base station may send the CHO configuration information by using radio resource control (radio resource control, RRC) reconfiguration signaling. The CHO configuration information may include a CHO trigger condition and information about one or more candidate cells (for example, a cell global identifier (cell global identifier, CGI) of the candidate cell, or a physical cell identifier (physical cell identifier, PCI) of the candidate cell and frequency information corresponding to the candidate cell). After receiving the CHO configuration information of the conditional handover, the UE measures, based on the CHO configuration information, whether cell quality of the candidate cell meets a handover trigger condition, and uses a specific candidate cell that meets the handover trigger condition as a target cell. Then, the UE performs a random access process with the determined target cell. When the random access is successfully completed, the UE sends an RRC reconfiguration complete message to a base station (namely, a target base station) to which the target cell belongs, to notify the target base station that the conditional handover is completed.

### CPC:

In the MR-DC scenario, to improve communication performance of the UE during movement, the UE may complete a PSCell change in a manner similar to the CHO, or in other words, apply the CHO to a PSCell change procedure. APSCell change manner is referred to as the CPC. Either the MN or the SN may trigger the CPC. An MN or an SN currently connected to the UE provides a candidate PSCell for the UE, where the SN is a source secondary node (source SN, S-SN) of the UE. Finally, the UE selects a candidate PSCell to change a current PSCell. The UE accesses a target SN (target SN, T-SN) to which the candidate PSCell belongs, and communicates with the target SN through the candidate PSCell, to complete a PSCell change. An implementation of SN-triggered CPC includes: Before sending candidate primary secondary cell information to the S-SN, the MN sends, to the UE, a reconfiguration message corresponding to the candidate primary secondary cells. Another implementation of the SN-triggered CPC includes: After sending the candidate primary secondary cell information to the S-SN, the MN sends a reconfiguration message to the UE.

Because the SN-triggered CPC has different implementations, the MN cannot know a specific implementation that is used to perform a corresponding operation. Consequently, a CPC procedure may not be normally performed. The following describes, with reference to the accompanying drawings, communication solutions provided in this application.

FIG. 4 is a flowchart of a communication method according to an embodiment of this application. As shown in FIG. 4, a method procedure includes the following steps.

401: A first access network device receives first indication information from a second access network device.

The first indication information (indication information 1) indicates the first access network device (subsequently referred to as an access network device 1) to send a first reconfiguration message after or before the first access network device sends first candidate primary secondary cell information to the second access network device. The first candidate primary secondary cell information indicates one or more first candidate primary secondary cells accepted by a third access network device in candidate primary secondary cells that the second access network device requests the third access network device to add. The plurality of first candidate primary secondary cells are candidate primary secondary cells accepted by the third access network device. The access network device 1 may be an MN of the UE, the second access network device may be an S-SN of the UE, and the third access network device may be a candidate T-SN of the UE.

In some implementations, the first access network device determines the first reconfiguration message, where the first reconfiguration message is used by a terminal to perform CPC. The first reconfiguration message may be an RRC reconfiguration (RRCReconfiguration) message. The first reconfiguration message may include source secondary node RRC reconfiguration (S-SN-RRCReconfiguration) sent by the second access network device to the MN, where the S-SN-RRCReconfiguration may include a measurement ID. The first reconfiguration message may further include conditional primary secondary cell information (conditional PSCell information). The conditional primary secondary cell information may include one or more PSCell IDs (namely, IDs of one or more first candidate primary secondary cells), and execution condition IDs corresponding to the one or more PSCell IDs, a target secondary node RRC reconfiguration (T-SN-RRCReconfiguration) message corresponding to the one or more PSCell IDs, and an MN-RRCReconfiguration message corresponding to the one or more PSCell IDs. The MN-RRCReconfiguration message is new configuration information corresponding to the MN when the UE accesses a new PSCell. That the execution condition ID and the measurement ID are in a one-to-one correspondence may be understood as the following: The execution condition ID and the measurement ID represent same content. The measurement ID corresponds to some measurement configurations, and the measurement configurations may include information such as a CPAC trigger event and a measurement gap. Each measurement ID corresponds to a different measurement configuration. In some implementations, the first indication information is included in a secondary node change required (SN Change Required) message.

S402: The first access network device sends the first reconfiguration message to the UE based on the first indication information.

The first reconfiguration message includes configuration information corresponding to the one or more first candidate primary secondary cells.

Optionally, the method further includes step S403: The access network device 1 sends the first candidate primary secondary cell information to the second access network device. It may be understood that step S403 may be performed before step 402, or may be performed after step S403. The access network device 1 determines an execution sequence of step S402 and step S403 based on the first indication information.

In this embodiment of this application, the first indication information indicates the access network device 1 to send the first reconfiguration message after or before the access network device 1 sends the first candidate primary secondary cell information to the second access network device. The first access network device sends the first reconfiguration message to the UE based on the first indication information, so that the first access network device can clearly determine a sequence of sending the first reconfiguration information to the UE and sending the first candidate primary secondary cell information to the second access network device, to normally perform a subsequent CPC procedure.

In this application, a granularity of the first indication information may be configured based on an actual requirement. It should be understood that when the first indication information has a different granularity, the first indication information includes different information, and accordingly, the first indication information has a different function. The following describes some possible implementations and possible granularities of the first indication information.

In a possible implementation, the first indication information includes an indication field. The indication field indicates the access network device 1 to send the first reconfiguration message after the access network device 1 sends the first candidate primary secondary cell information to the second access network device, and the indication field further indicates the access network device 1 to send a second reconfiguration message after the access network device 1 sends second candidate primary secondary cell information to the second access network device; the second candidate primary secondary cell information indicates one or more second candidate primary secondary cells accepted by a fourth access network device in candidate primary secondary cells that the second access network device requests the fourth access network device to add; and the second reconfiguration message includes configuration information corresponding to the one or more second candidate primary secondary cells. Alternatively, the indication field indicates the access network device 1 to send the first reconfiguration message before the access network device 1 sends the first candidate primary secondary cell information to the second access network device, and the indication field further indicates the access network device 1 to send a second reconfiguration message before the access network device 1 sends second candidate primary secondary cell information to the second access network device; the second candidate primary secondary cell information indicates one or more second candidate primary secondary cells accepted by a fourth access network device in candidate primary secondary cells that the second access network device requests the fourth access network device to add; and the second reconfiguration message includes configuration information corresponding to the one or more second candidate primary secondary cells.

For example, the indication field included in the first indication information occupies one bit. If the indication field is "1", the access network device 1 is indicated to send the first reconfiguration message after sending the first candidate primary secondary cell information to the second access network device, and the access network device 1 is further indicated to send the second reconfiguration message after sending the second candidate primary secondary cell information to the second access network device. Alternatively, if the indication field is "0", the access network device 1 is indicated to send the first reconfiguration message before sending the first candidate primary secondary cell information to the second access network device, and the access network device 1 is further indicated to send the second reconfiguration message before sending the second candidate primary secondary cell information to the second access network device.

The fourth access network device is a candidate T-SN, and may be the third access network device, or may be another access network device. It should be understood that, if the fourth access network device is the third access network device, the first reconfiguration message and the first candidate primary secondary cell information are sent by the MN in one SN-triggered CPC procedure, and the second reconfiguration message and the second candidate primary secondary cell information are sent by the MN in another SN-triggered CPC procedure.

The first candidate primary secondary cell information and the second candidate primary secondary cell information may be considered as two types of candidate primary secondary cell information corresponding to the second access network device (namely, the S-SN of the UE). Each type of candidate primary secondary cell information separately corresponds to one or more candidate primary secondary cells of different candidate T-SNs. The first reconfiguration message and the second reconfiguration message may be considered as two reconfiguration messages (for example, RRCReconfiguration messages) corresponding to the second access network device. The granularity of the first indication information may be for each pair of candidate primary secondary cell information and a reconfiguration message that correspond to the second access network device. For example, both the first candidate primary secondary cell information and the first reconfiguration message correspond to the first candidate primary secondary cell, or both the second candidate primary secondary cell information and the second reconfiguration message correspond to the second candidate primary secondary cell. In other words, the granularity of the first indication information may be for each source secondary node, namely, per S-SN. In other words, for each pair of candidate primary secondary cell information and a reconfiguration message that correspond to different candidate T-SNs and that are determined by the second access network device, the first indication information indicates the access network device 1 to send the reconfiguration message after (or before) the access network device 1 sends the candidate primary secondary cell information to the second access network device. In some implementations, the first indication information includes an indication field. The indication field indicates a sequence in which the first access network device sends all pairs of candidate primary secondary cell information and reconfiguration messages that correspond to all candidate target secondary nodes and that are determined by the second access network device. For example, if the first indication information includes an indication field 1, the indication information indicates the access network device 1 to send a reconfiguration message corresponding to any candidate primary secondary cell information after the access network device 1 sends the any candidate primary secondary cell information to the second access network device. For another example, if the first indication information includes an indication field 0, the indication information indicates the access network device 1 to send a reconfiguration message corresponding to any candidate primary secondary cell information before the access network device 1 sends the any candidate primary secondary cell information to the second access network device.

In some implementations, the first indication information may include an identity of the second access network device, so that for any pair of candidate primary secondary cell information and a reconfiguration message that correspond to the second access network device, the first indication information indicates the access network device 1 to send a reconfiguration message to the UE after (or before) the access network device 1 sends the candidate primary secondary cell information to the second access network device.

In this implementation, the granularity of the first indication information is each source secondary node. In this way, the second access network device can indicate, by sending the first indication information to the access network device 1, a sequence in which the access network device 1 sends any pair of candidate primary secondary cell information and a reconfiguration message. Therefore, signaling overheads are low, and a CPC procedure can be normally performed.

It may be understood that the third access network device and the fourth access network device used as the T-SN are merely examples, and the second access network device used as the S-SN may determine N (where N>1) candidate T-SNs. The indication field in the first indication information may be used to indicate a sequence of sending candidate primary secondary cell information and a reconfiguration message that correspond to each of the N candidate T-SNs. In other words, the candidate primary secondary cell information and the reconfiguration messages that correspond to the N candidate T-SNs are sent in a same sequence.

In a possible implementation, the first indication information indicates the access network device 1 to send the first reconfiguration message to the UE after (or before) the access network device 1 sends the first candidate primary secondary cell information to the second access network device. The first indication information further indicates the access network device 1 to send the second reconfiguration message to the UE before (or after) the access network device 1 sends the second candidate primary secondary cell information to the second access network device. The second candidate primary secondary cell information indicates one or more second candidate primary secondary cells accepted by a fourth access network device in candidate primary secondary cells that the second access network device requests the fourth access network device to add. The second reconfiguration message includes configuration information corresponding to the one or more second candidate primary secondary cells.

It can be learned that the first indication information may independently indicate a sequence in which the access network device 1 sends the first reconfiguration message and the first candidate primary secondary cell information, and a sequence in which the access network device 1 sends the second reconfiguration message and the second candidate primary secondary cell information. The first candidate primary secondary cell information and the first reconfiguration message may be considered as a pair of candidate primary secondary cell information and a reconfiguration message that correspond to the third access network device (one T-SN of the UE). The second candidate primary secondary cell information and the second reconfiguration message may be considered as a pair of candidate primary secondary cell information and a reconfiguration message that correspond to the fourth access network device (another T-SN of the UE). It should be understood that the first indication information may independently indicate a sequence in which the access network device 1 sends each pair of candidate primary secondary cell information and a reconfiguration message (for example, the first candidate primary secondary cell information and the first reconfiguration message) that correspond to the third access network device, and a sequence in which the access network device 1 sends each pair of candidate primary secondary cell information and a reconfiguration message (for example, the second candidate primary secondary cell information and the second reconfiguration message) that correspond to the fourth access network device. It can be learned that the granularity of the first indication information may be for each pair of candidate primary secondary cell information and a reconfiguration message that correspond to each T-SN (for example, the third access network device and the fourth access network device). In other words, the granularity of the first indication information may be for each target secondary node (a T-SN), namely, per candidate-SN.

In some implementations, the first indication information includes a first field and a second field. The first field corresponds to the identity of the third access network device and/or the identities of the one or more first candidate primary secondary cells; and the second field corresponds to the identity of the fourth access network device and/or the identities of the one or more second candidate primary secondary cells. The first field indicates the first access network device to send the first reconfiguration message before or after the first access network device sends the first candidate primary secondary cell information to the second access network device. The second field indicates the first access network device to send the second reconfiguration message before or after the first access network device sends the second candidate primary secondary cell information to the second access network device. The second candidate primary secondary cell information indicates the one or more second candidate primary secondary cells; and the one or more second candidate primary secondary cells are one or more candidate primary secondary cells accepted by the fourth access network device in candidate primary secondary cells that the second access network device requests the fourth access network device to add. The second reconfiguration message includes configuration information corresponding to the one or more second candidate primary secondary cells.

In these embodiments, the identities of the one or more first candidate primary secondary cells may be identities of all candidate primary secondary cells accepted by the third access network device in candidate primary secondary cells that the second access network device requests the third access network device to add. The identities of the one or more second candidate primary secondary cells may be identities of all candidate primary secondary cells accepted by the fourth access network device in the candidate primary secondary cells that the second access network device requests the fourth access network device to add. Therefore, the first field corresponds to the identity of the third access network device, that is, corresponds to the identities of the one or more first candidate primary secondary cells; and the second field corresponds to the identity of the fourth access network device, that is, corresponds to the identities of the one or more second candidate primary secondary cells.

In some implementations, the first indication information may further include the identity of the third access network device and/or the identities of the one or more first candidate primary secondary cells, and the identity of the fourth access network device and/or the identities of the one or more second candidate primary secondary cells. Optionally, the first indication information includes identities of one or more candidate primary secondary cells of the third access network device, but does not include the identity of the third access network device; and the first indication information may include identities of one or more candidate primary secondary cells of the fourth access network device, but does not include the identity of the fourth access network device. Optionally, the first indication information includes the identity of the third access network device, but does not include the identities of the one or more candidate primary secondary cells; and the first indication information may include the identity of the fourth access network device, but does not include the identities of the one or more candidate primary secondary cells of the fourth access network device.

FIG. 5 shows an example of first indication information according to an embodiment of this application. As shown in FIG. 5, the first indication information includes an identity of a third access network device, an identity of a fourth access network device, a first field, and a second field. The first field may be one or more bits, and the second field may also be one or more bits. For example, the first field is "0", and the second field is " 1". That the first field is "0" indicates that the first reconfiguration message is sent before the first candidate primary secondary cell information is sent. That the second field is "1" indicates that the second reconfiguration message is sent after the second candidate primary secondary cell information is sent. For another example, the first field is "00", and the second field is "11". That the first field is "00" indicates that the first reconfiguration message is sent before the first candidate primary secondary cell information is sent. That the second field is "11" indicates that the second reconfiguration message is sent after the second candidate primary secondary cell information is sent. In FIG. 5, the first field corresponds to the identity of the third access network device, and the second field corresponds to the identity of the fourth access network device. It should be understood that the first indication information may include identities of two or more T-SNs (for example, the third access network device and the fourth access network device) and fields (for example, the first field and the second field) corresponding to the T-SNs. Table 1 shows an example of an identity of each T-SN and a field corresponding to the identity, where the identity and the field are included in the first indication information.

**Table 1**

| Identity of a T-SN of UE | Field |
|---|---|
| Identity of a third access network device | First field |
| Identity of a fourth access network device | Second field |
| ... | ... |

In some implementations, the first field may correspond to identities of one or more access network devices, and the second field may correspond to identities of one or more access network devices. For example, the first field corresponds to an identity of an access network device 3 and an identity of an access network device 4. The first field indicates a sequence in which the first access network device sends candidate primary secondary cell information and a reconfiguration message that correspond to the access network device 3 (one T-SN of the UE), and further indicates a sequence in which the first access network device sends candidate primary secondary cell information and a reconfiguration message that correspond to the access network device 4 (another T-SN of the UE). In other words, one field may be used to indicate pairs of candidate primary secondary cell information and reconfiguration messages that respectively correspond to a plurality of T-SNs to be sent in a same sequence. In these embodiments, a plurality of fields corresponding to a plurality of T-SNs do not need to be used, and therefore, fewer bits are occupied.

In some implementations, the first indication information includes two or more fields, and each field corresponds to an identity of one access network device. In these embodiments, each field may independently indicate a sequence of candidate primary secondary cell information and a reconfiguration message that correspond to one access network device.

In this implementation, the granularity of the first indication information is per candidate-SN, and the first indication information may independently indicate a sequence in which the access network device 1 sends each pair of candidate primary secondary cell information and a reconfiguration message that correspond to each T-SN (for example, the third access network device and the fourth access network device) of the UE, so that flexibility is high. In addition, it is not required to use two or more pieces of indication information to respectively indicate sequences of pairs of candidate primary secondary cell information and a reconfiguration message that respectively correspond to two or more T-SNs, thereby reducing signaling overheads.

In a possible implementation, the third access network device is a T-SN of the UE, and the first indication information includes the identity of the third access network device and does not include an identity of another T-SN of the UE. In this implementation, the first indication information includes only an identity of one T-SN (namely, the third access network device) of the UE, to indicate a sequence in which the access network device 1 sends each pair of candidate primary secondary cell information and a reconfiguration message (for example, the first candidate primary secondary cell information and the first reconfiguration message) that correspond to the third access network device, so that a small quantity of bits is occupied. The granularity of the first indication information may be for each pair of candidate primary secondary cell information and a reconfiguration message that correspond to each T-SN (for example, the third access network device). In other words, the granularity of the first indication information may be for each target secondary node (a T-SN), namely, per T-SN. It should be understood that, in this implementation, each piece of indication information corresponds to one T-SN of the UE. For example, the first access network device sends indication information 1 (namely, the first indication information) to the access network device 1, where the first indication information only indicates the access network device 1 to send the first reconfiguration message before (or after) the access network device 1 sends the first candidate primary secondary cell information to the second access network device. The first access network device sends indication information 2 to the access network device 1, where the first indication information only indicates the access network device 1 to send the second reconfiguration message before (or after) the access network device 1 sends the second candidate primary secondary cell information to the second access network device.

In a possible implementation, the first indication information includes a third field and a fourth field, the third field corresponds to identities of the one or more first candidate primary secondary cells, and the fourth field corresponds to identities of one or more third candidate primary secondary cells.

Optionally, the third field indicates the first access network device to send the first reconfiguration message after the first access network device sends the first candidate primary secondary cell information to the second access network device. The fourth field indicates the first access network device to send a third reconfiguration message corresponding to the one or more third candidate primary secondary cells before the first access network device sends, to the second access network device, third candidate primary secondary cell information corresponding to the one or more third candidate primary secondary cells. The one or more third candidate primary secondary cells belong to one or more access network devices, and the one or more access network devices include the third access network device and/or another access network device. In some implementations, the third field further corresponds to identities of one or more fourth candidate primary secondary cells. The third field further indicates the first access network device to send a fourth reconfiguration message corresponding to the one or more fourth candidate primary secondary cells after the first access network device sends, to the second access network device, fourth candidate primary secondary cell information corresponding to the one or more fourth candidate primary secondary cells.

Optionally, the third field indicates the first access network device to send the first reconfiguration message before the first access network device sends the first candidate primary secondary cell information to the second access network device. The fourth field indicates the first access network device to send a third reconfiguration message corresponding to the one or more third candidate primary secondary cells after the first access network device sends, to the second access network device, third candidate primary secondary cell information corresponding to the one or more third candidate primary secondary cells. The one or more third candidate primary secondary cells correspond to one or more access network devices. In some implementations, the first indication information further includes the identities that are of the one or more fourth candidate primary secondary cells and that correspond to the third field. The third field further indicates the first access network device to send a fourth reconfiguration message corresponding to the one or more fourth candidate primary secondary cells before the first access network device sends, to the second access network device, fourth candidate primary secondary cell information corresponding to the one or more fourth candidate primary secondary cells.

The one or more fourth candidate primary secondary cells belong to one or more access network devices, and the one or more access network devices include the third access network device and/or another access network device that is used as a candidate T-SN.

Optionally, the first indication information further includes the identities of the one or more first candidate primary secondary cells and the identities of the one or more third candidate primary secondary cells.

It should be understood that the one or more third candidate primary secondary cells corresponding to the fourth field may belong to a same access network device, or may belong to different access network devices. The third field may correspond to candidate primary secondary cells that belong to different access network devices. The identities that are of the one or more first candidate primary secondary cells and that correspond to the third field may be identities of some candidate primary secondary cells that are accepted by the third access network device, or may be identities of all candidate primary secondary cells that are accepted by the third access network device. For example, the third access network device accepts a first candidate primary secondary cell 1 to a first candidate primary secondary cell 10 that the second access network device requests the third access network device to add. The first candidate primary secondary cell 1 to a first candidate primary secondary cell 4 correspond to the third field, and a first candidate primary secondary cell 5 to the first candidate primary secondary cell 10 correspond to the fourth field. In the example, the third field may indicate the first access network device to send reconfiguration messages corresponding to the first candidate primary secondary cell 1 to the first candidate primary secondary cell 4 after the first access network device sends, to the second access network device, candidate primary secondary cell information corresponding to the first candidate primary secondary cell 1 to the first candidate primary secondary cell 4. The fourth field may indicate the first access network device to send reconfiguration messages corresponding to the first candidate primary secondary cell 5 to the first candidate primary secondary cell 10 before the first access network device sends, to the second access network device, candidate primary secondary cell information corresponding to the first candidate primary secondary cell 5 to the first candidate primary secondary cell 10. For an access network device, candidate primary secondary cells received or rejected by the access network device may be divided into two parts. One part corresponds to the third field, and the other part corresponds to the fourth field. Alternatively, for an access network device, all candidate primary secondary cells received or rejected by the access network device may correspond to the third field or the fourth field. The third field may correspond to identities of candidate primary secondary cells belonging to different access network devices, or may only correspond to identities of one or more candidate primary secondary cells belonging to a same access network device. Similarly, the fourth field may correspond to identities of candidate primary secondary cells belonging to different access network devices, or may only correspond to identities of one or more candidate primary secondary cells belonging to a same access network device.

It can be learned that the first indication information may independently indicate a sequence in which the access network device 1 sends a reconfiguration message and candidate primary secondary cell information that correspond to each candidate primary secondary cell. The granularity of the first indication information may be for the candidate primary secondary cell information and the reconfiguration message that correspond to each candidate primary secondary cell. In other words, the granularity of the first indication information may be for each candidate primary secondary cell, namely, per PSCell. FIG. 6A shows an example of another piece of first indication information according to an embodiment of this application. As shown in FIG. 6A, the first indication information includes a third field, an identity 1 to an identity K (including identities of one or more first candidate primary secondary cells and an identity of a candidate primary secondary cell belonging to another access network device) that correspond to the third field, a fourth field, and an identity M to an identity P (identities of one or more third candidate primary secondary cells) that correspond to the fourth field. K, M, and P are all integers greater than 1, and P is greater than M. The third field may be one or more bits, and the fourth field may also be one or more bits. For example, the third field is "0", and the fourth field is "1". For another example, the third field is "00", and the fourth field is "11". It should be understood that the first indication information may include identities of two or more candidate primary secondary cells, and a field (for example, the third field or the fourth field) corresponding to the identity of each candidate primary secondary cell. Table 2 shows an example of the identity of each candidate primary secondary cell and the field corresponding to the identity of the candidate primary secondary cell, where the identity and the field are included in the first indication information.

**Table 2**

| Identity of a candidate primary secondary cell | Field |
|---|---|
| First candidate primary secondary cell 1 (identity 1) | Third field |
| First candidate primary secondary cell 2 (identity 2) | Third field |
| Third candidate primary secondary cell 3 (identity 3) | Third field |
| ... | ... |
| Third candidate primary secondary cell 1 (identity M) | Fourth field |
| Third candidate primary secondary cell 2 (identity N) | Fourth field |
| First candidate primary secondary cell 3 (identity N+1) | Fourth field |
| ... | ... |

It can be learned from Table 2 that different candidate primary secondary cells belonging to a same access network device may correspond to different fields. For example, the first candidate primary secondary cell 2 (the identity 2) corresponds to the third field, and the first candidate primary secondary cell 3 (the identity N+1) corresponds to the fourth field. In other words, one field may correspond to a plurality of primary secondary candidate cells belonging to different access network devices.

In some implementations, the identity of the candidate primary secondary cell may be a cell global identifier (Cell Global Identifier, CGI) or a PCI. In some implementations, the first indication information further includes the identity of the third access network device, and the identities of the one or more first candidate primary secondary cells correspond to the identity of the third access network device. The identities of the one or more first candidate primary secondary cells may be temporary numbers. In this way, the access network device 1 may determine the one or more first candidate primary secondary cells based on the identity of the third access network device and the identities of the one or more first candidate primary secondary cells, and the identities of the one or more first candidate primary secondary cells may occupy a small quantity of bits. For example, the identities of the one or more third candidate primary secondary cells include a number 1, a number 2, a number 3, a number 4, and a number 5. The access network device 1 may determine the one or more first candidate primary secondary cells based on the identity of the third access network device and the number 1, the number 2, the number 3, the number 4, and the number 5 (numbers of the candidate primary secondary cells of the third access network device).

In this implementation, the granularity of the first indication information is per PSCell, and the first indication information may independently indicate a sequence in which the access network device 1 sends, to the second access network device, a reconfiguration message and candidate primary secondary cell information that correspond to each candidate primary secondary cell, so that flexibility is high, and signaling overheads are low.

In another possible implementation, the first candidate primary secondary cell information indicates one first candidate primary secondary cell accepted by the third access network device in the candidate primary secondary cells that the second access network device requests the third access network device to add. The first reconfiguration message includes configuration information corresponding to the one first candidate primary secondary cell. The first indication information includes a fifth field and an identity that is of the one first candidate primary secondary cell and that corresponds to the fifth field. The fifth field indicates the first access network device to send the first reconfiguration message before or after the first access network device sends the first candidate primary secondary cell information to the second access network device. In this implementation, the fifth field corresponds to an identity of only one candidate primary secondary cell.

In some implementations, the first indication information may include two or more fields (including the fifth field) and identities that are of two or more candidate primary secondary cells and that are in a one-to-one correspondence with the two or more fields. Each field indicates a sequence in which the first access network device sends candidate primary secondary cell information and a reconfiguration message that correspond to one candidate primary secondary cell and that are indicated by the field. FIG. 6B shows an example of another piece of first indication information according to an embodiment of this application.

As shown in FIG. 6B, the first indication information includes an identity 1, a field 1 corresponding to the identity 1, an identity 2, a field 2 corresponding to the identity 2, ..., an identity H, and a field H corresponding to the identity H. Each identity is an identity of a candidate primary secondary cell of the UE. The identity 1 to the identity H may belong to a same access network device, or may belong to different access network devices. Each field indicates a sequence in which the first access network device sends candidate primary secondary cell information and a reconfiguration message that correspond to the field. Each of the field 1 to the field H is either of two different fields. For example, each of the field 1 to the field H is either of "0" and "1". For example, if the field 1 is "0", the field 1 indicates the second access network device to send a reconfiguration message corresponding to the identity 1 before the first access network device sends candidate primary secondary cell information corresponding to the identity 1. If the field 2 is "1", the field 2 indicates the second access network device to send a reconfiguration message corresponding to the identity 2 after the first access network device sends candidate primary secondary cell information corresponding to the identity 2.

It may be understood that, for a plurality of candidate primary secondary cells for which the first indication information indicates that candidate primary secondary cell information and reconfiguration messages are sent in a same sequence, the reconfiguration messages respectively corresponding to the candidate primary secondary cells may be sent to the UE in one message, and the candidate primary secondary cell information respectively corresponding to the candidate primary secondary cells may also be sent to the second access network device in the same message.

In this implementation, each candidate primary secondary cell corresponds to one field, so that reliability is high, and configuration may be performed flexibly.

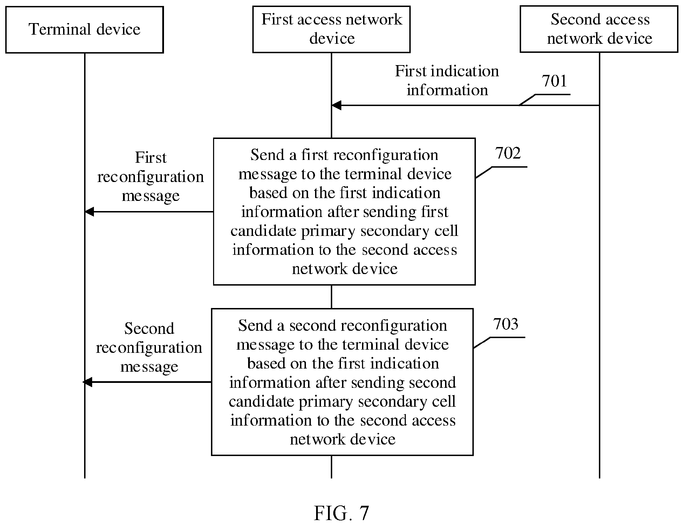

FIG. 7 is a flowchart of another communication method according to an embodiment of this application. A method procedure in FIG. 7 is a possible implementation of the method procedure in FIG. 4. As shown in FIG. 7, the method procedure includes the following steps.

701: An access network device 1 receives first indication information from a second access network device.

For step 701, refer to step 401.

The first indication information indicates the access network device 1 to send a first reconfiguration message to UE after the access network device 1 sends first candidate primary secondary cell information to the second access network device. The first candidate primary secondary cell information indicates one or more first candidate primary secondary cells accepted by a third access network device in candidate primary secondary cells that the second access network device requests the third access network device to add. The first reconfiguration message includes configuration information corresponding to the one or more first candidate primary secondary cells.

The first indication information further indicates the access network device 1 to send a second reconfiguration message after the access network device 1 sends second candidate primary secondary cell information to the second access network device. The second candidate primary secondary cell information indicates one or more second candidate primary secondary cells accepted by a fourth access network device in candidate primary secondary cells that the second access network device requests the fourth access network device to add. The second reconfiguration message includes configuration information corresponding to the one or more second candidate primary secondary cells.

The first indication information may include an identity of the second access network device. A granularity of the first indication information is per S-SN.

702: The access network device 1 sends the first reconfiguration message to the UE based on the first indication information after sending the first candidate primary secondary cell information to the second access network device.

703: The access network device 1 sends a second reconfiguration message to the UE based on the first indication information after sending second candidate primary secondary cell information to the second access network device.

In some implementations, the first indication information indicates the access network device 1 to send the first reconfiguration message to the UE before the access network device 1 sends the first candidate primary secondary cell information to the second access network device, and further indicates the access network device 1 to send the second reconfiguration message before the access network device 1 sends the second candidate primary secondary cell information to the second access network device. Step 702 may be replaced with the following: The access network device 1 sends the first reconfiguration message to the UE based on the first indication information before sending the first candidate primary secondary cell information to the second access network device. Step 703 may be replaced with the following: The access network device 1 sends a second reconfiguration message to the UE based on the first indication information before sending second candidate primary secondary cell information to the second access network device.

In some implementations, the first reconfiguration message and the second reconfiguration message may be included in a same piece of reconfiguration information (for example, an RRC reconfiguration message). In other words, the access network device 1 sends, to the UE, a reconfiguration message including the first reconfiguration message and the second reconfiguration message, that is, the first reconfiguration message and the second reconfiguration message are sent together. In these embodiments, the first reconfiguration message and the second reconfiguration message are sent by using one reconfiguration message, so that signaling overheads can be reduced.

In some implementations, the first reconfiguration message and the second reconfiguration message are two different messages, that is, the first reconfiguration message and the second reconfiguration message are not sent together. In these embodiments, the access network device 1 may first send the first reconfiguration message and then send the second reconfiguration message, or may first send the second reconfiguration message and then send the first reconfiguration message. For example, the access network device 1 sends the second reconfiguration message after receiving a secondary node addition request acknowledgment message from a fourth access network device. The secondary node addition request acknowledgment message indicates one or more second candidate primary secondary cells accepted by the fourth access network device in candidate primary secondary cells that the second access network device requests the fourth access network device to add. In these embodiments, the first reconfiguration message and the second reconfiguration message are separately sent, so that the UE can receive a part of the reconfiguration message more quickly, and flexibility is high.

In this embodiment of this application, whether the access network device 1 sends the first reconfiguration message and the second reconfiguration message by using one message or sends the first reconfiguration message and the second reconfiguration message by using a plurality of messages is not limited.

In this embodiment of this application, the granularity of the first indication information is per S-SN. The first indication information can indicate the access network device 1 to send the first reconfiguration message after the access network device 1 sends the first candidate primary secondary cell information to the second access network device, and can also indicate the access network device 1 to send the second reconfiguration message after the access network device 1 sends the second candidate primary secondary cell information to the second access network device. In this way, the second access network device does not need to additionally send indication information to indicate the access network device 1 to send the first reconfiguration message after the access network device 1 sends the first candidate primary secondary cell information to the second access network device, so that signaling overheads are reduced.

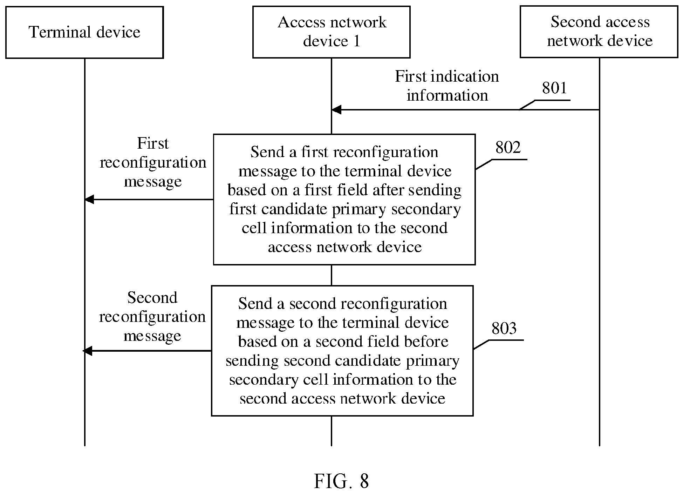

FIG. 8 is a flowchart of another communication method according to an embodiment of this application. A method procedure in FIG. 8 is a possible implementation of the method described in FIG. 4. As shown in FIG. 8, the method procedure includes the following steps.

801: An access network device 1 receives first indication information from a second access network device.

For step 801, refer to step 401.

The first indication information indicates the access network device 1 to send a first reconfiguration message after the access network device 1 sends first candidate primary secondary cell information to the second access network device. The first indication information further indicates the access network device 1 to send a second reconfiguration message before the access network device 1 sends second candidate primary secondary cell information to the second access network device. In a possible implementation, the first indication information includes a first field, a second field, an identity that is of a third access network device and that corresponds to the first field, and an identity that is of a fourth access network device and that corresponds to the second field. The first field indicates the access network device 1 to send the first reconfiguration message after the access network device 1 sends the first candidate primary secondary cell information to the second access network device. The second field indicates the access network device 1 to send the second reconfiguration message before the access network device 1 sends the second candidate primary secondary cell information to the second access network device. A granularity of the first indication information is per candidate-SN.

802: The access network device 1 sends the first reconfiguration message to the UE based on the first field after sending the first candidate primary secondary cell information to the second access network device.

803: The access network device 1 sends the second reconfiguration message to the UE based on the second field before sending the second candidate primary secondary cell information to the second access network device.

In some implementations, step 802 may be replaced with the following: The access network device 1 sends the first reconfiguration message to the UE based on the first field before sending the first candidate primary secondary cell information to the second access network device. Step 803 may be replaced with the following: The access network device 1 sends the second reconfiguration message to the UE based on the second field after sending the second candidate primary secondary cell information to the second access network device.

A sequence of steps 802 and 803 is not limited in this application.

In this embodiment of this application, the first indication information may independently indicate a sequence in which the access network device 1 sends the first reconfiguration message and the first candidate primary secondary cell information, and a sequence in which the access network device 1 sends the second reconfiguration message and the second candidate primary secondary cell information, so that signaling overheads are low.

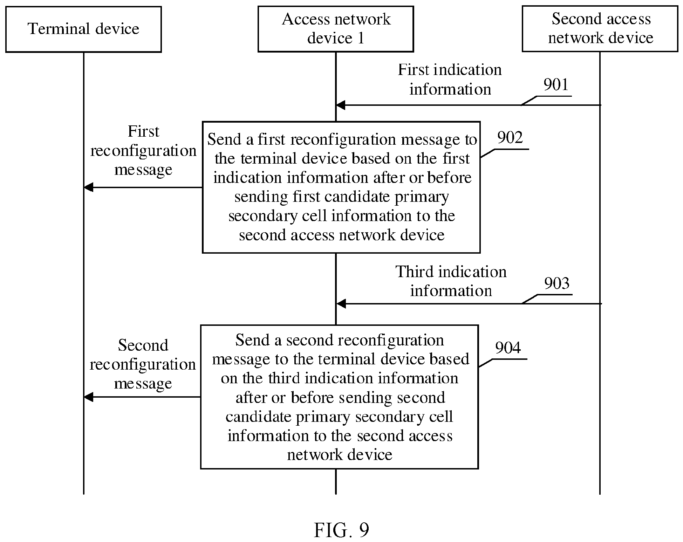

FIG. 9 is a flowchart of another communication method according to an embodiment of this application. A method procedure in FIG. 9 is a possible implementation of the method described in FIG. 4. As shown in FIG. 9, the method procedure includes the following steps.

901: An access network device 1 receives first indication information from a second access network device.

For step 901, refer to step 401.

The first indication information indicates the access network device 1 to send a first reconfiguration message to UE after or before the access network device 1 sends first candidate primary secondary cell information to the second access network device. A third access network device is a T-SN of UE, the first indication information may include an identity of the third access network device and a first field, and the first field indicates the access network device 1 to send the first reconfiguration message after or before the access network device 1 sends the first candidate primary secondary cell information to the second access network device.

902: The access network device 1 sends the first reconfiguration message to the UE based on the first indication information after or before sending the first candidate primary secondary cell information to the second access network device.

903: The access network device 1 receives third indication information from the second access network device.

The third indication information indicates the access network device 1 to send a second reconfiguration message to the UE after or before the access network device 1 sends second candidate primary secondary cell information to the second access network device. A fourth access network device is another T-SN of the UE, the third indication information may include an identity of the fourth access network device and a second field, and the second field indicates the access network device 1 to send the second reconfiguration message after or before the access network device 1 sends the second candidate primary secondary cell information to the second access network device.

Both a granularity of the first indication information and a granularity of the third indication information are per candidate-SN.

904: The access network device 1 sends the second reconfiguration message to the UE based on the third indication information after or before sending the second candidate primary secondary cell information to the second access network device.

In this embodiment of this application, all granularities of the indication information are per candidate-SN, and each piece of indication information independently indicates a sequence in which the access network device 1 sends candidate primary secondary cell information and a reconfiguration message that correspond to one T-SN of the UE, so that flexibility is high.

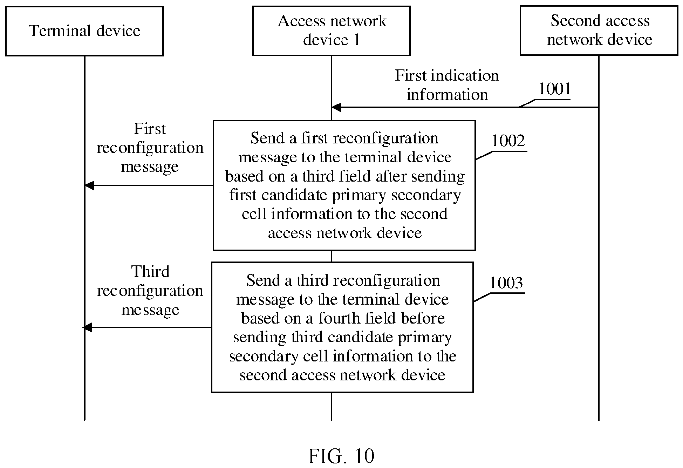

FIG. 10 is a flowchart of another communication method according to an embodiment of this application. A method procedure in FIG. 10 is a possible implementation of the method described in FIG. 4. As shown in FIG. 10, the method procedure includes the following steps.

1001: An access network device 1 receives first indication information from a second access network device.

For step 1001, refer to step 401.

In some implementations, the first indication information includes a third field, identities that are of one or more first candidate primary secondary cells and that correspond to the third field, a fourth field, and identities that are of one or more third candidate primary secondary cells and that correspond to the fourth field. The third field indicates the first access network device to send the first reconfiguration message after the first access network device sends the first candidate primary secondary cell information to the second access network device. The fourth field indicates the first access network device to send a third reconfiguration message corresponding to the one or more third candidate primary secondary cells before the first access network device sends, to the second access network device, third candidate primary secondary cell information corresponding to the one or more third candidate primary secondary cells. The one or more third candidate primary secondary cells belong to one or more access network devices. A granularity of the first indication information is per PSCell. It is assumed that the second access network device determines that a cell 1 and a cell 2 managed by a third access network device are used as candidate PSCells of UE. An identity of the cell 1 corresponds to the third field, and an identity of the cell 2 corresponds to the fourth field.

1002: The access network device 1 sends the first reconfiguration message to the UE based on the third field after sending the first candidate primary secondary cell information to the second access network device.

1003: The access network device 1 sends the third reconfiguration message to the UE based on the fourth field before sending the third candidate primary secondary cell information to the second access network device.

Therefore, although both the cell 1 and the cell 2 belong to the third access network device, pieces of reconfiguration information respectively corresponding to the cell 1 and the cell 2 are sent independently.

In some implementations, step 1002 may be replaced with the following: The access network device 1 sends the first reconfiguration message to the UE based on the third field before sending the first candidate primary secondary cell information to the second access network device. Step 1003 may be replaced with the following: The access network device 1 sends the third reconfiguration message to the UE based on the fourth field after sending the third candidate primary secondary cell information to the second access network device.

A sequence of the foregoing steps 1002 and 1003 is not limited in this application.

In this embodiment of this application, the granularity of the first indication information is per PSCell. The first indication information may independently indicate a sequence in which the access network device 1 sends the first reconfiguration message and the first candidate primary secondary cell information, and a sequence in which the access network device 1 sends the third reconfiguration message and the third candidate primary secondary cell information, so that signaling overheads are low.

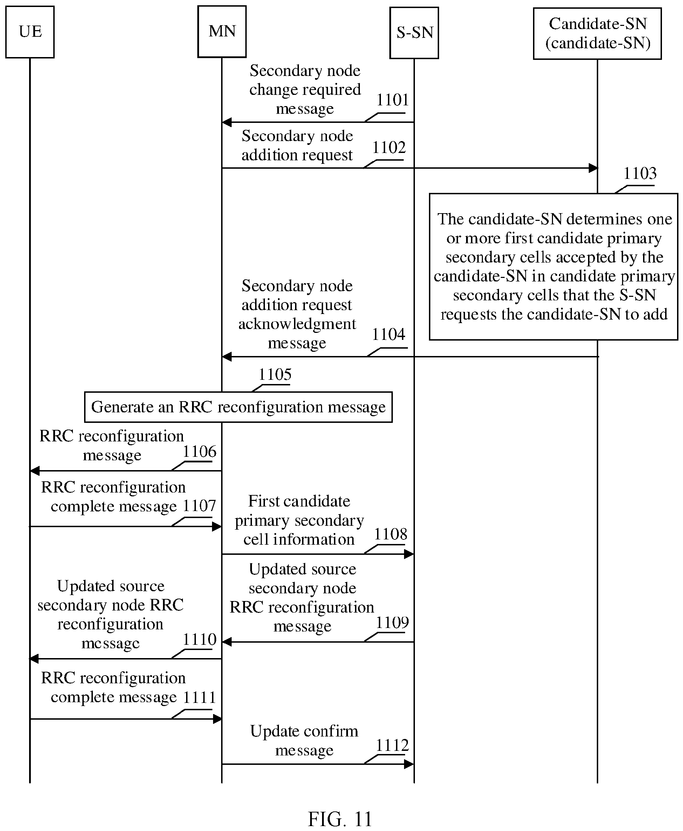

FIG. 11 is a flowchart of another communication method according to an embodiment of this application. A method procedure in FIG. 11 is a possible implementation of the method described in FIG. 4. In FIG. 11, an S-SN may be the foregoing second access network device, namely, a current secondary node of UE; an MN may be the foregoing access network device 1, namely, a master node of the UE; and a candidate-SN (candidate-SN) may alternatively be referred to as a candidate target-SN, and may be the foregoing third access network device, namely, a T-SN of the UE. As shown in FIG. 11, the method procedure includes the following steps.

1101: The S-SN sends a secondary node change required message to the MN.

The secondary node change required (SN change required) message may include an identity (identity, ID) of the candidate-SN, a candidate primary secondary cell list (candidate PSCell list), and S-SN-RRCReconfiguration. A candidate-candidate SN may be an SN corresponding to one or more PSCells that the S-SN expects to add. The candidate PSCell list includes one or more PSCell IDs (namely, identities of the one or more PSCells that the S-SN expects to add), and an execution condition (execution condition) ID corresponding to each PSCell ID. The S-SN-RRCReconfiguration includes measurement-related information, for example, a measurement ID. The measurement ID corresponds to the execution condition ID.

In some implementations, the secondary node change required message includes the first indication information. The first indication information indicates the MN (namely, an access network device 1) to send a first reconfiguration message before the MN sends first candidate primary secondary cell information to the S-SN (namely, a second access network device). In this embodiment of this application, the first indication information may be sent to the MN through the S-SN during a change preparation period, or may be sent to the MN through the S-SN before the change preparation period. The first indication information is sent to the MN through the S-SN during the change preparation period. The first indication information may be included in the SN change required message. Alternatively, the first indication information may be sent in other signaling, or may be separately sent. In addition, the information may not be carried in each CPC procedure initiated by the S-SN. If no new indication information (for example, second indication information) is received, the received first indication information may be used by default. The first indication information may be of a granularity per S-SN, per candidate-SN, or per PSCell.

1102: The MN sends a secondary node addition request to the candidate-SN.

The MN may send, based on a candidate-SN ID, a secondary node addition request to a candidate-SN indicated by the MN. The secondary node addition request (SN addition request) may include a CAPA indicator (indicator) field and a candidate PSCell list, where the CAPA indicator field indicates that the message is a CPAC request rather than a PAC request.

1103: The candidate-SN determines one or more first candidate primary secondary cells accepted by the candidate-SN in candidate primary secondary cells that the S-SN requests the candidate-SN to add.

The secondary node addition request includes the candidate PSCell list, and the candidate PSCell list includes the candidate primary secondary cells that the S-SN requests the candidate-SN to add. Before receiving the secondary node addition request, the candidate-SN may determine one or more first candidate primary secondary cells accepted by the candidate-SN. The S-SN determines one or more PSCells corresponding to the candidate-SN. However, the candidate-SN may not accept all the PSCells requested by the S-SN, and may reject some PSCells because the some PSCells are overloaded or resources are insufficient; and the candidate-SN receives remaining PSCells. Step 1103 may be understood as the following: The candidate-SN performs a PSCell decision operation.

1104: The candidate-SN sends a secondary node addition request acknowledgment message to the MN.

The secondary node addition request acknowledgment (SN addition request ACK) message may include one or more PSCell IDs (namely, IDs of the one or more first candidate primary secondary cells) accepted by the candidate-SN, and a T-SN-RRCReconfiguration message corresponding to the one or more PSCell IDs. The T-SN-RRCReconfiguration message includes information such as random access information, and the information is delivered to the UE so that the UE learns necessary configuration information for accessing the PSCell. In some implementations, each PSCell ID corresponds to one T-SN-RRCReconfiguration message, that is, each PSCell corresponds to one T-SN-RRCReconfiguration message.

1105: The MN generates an RRC reconfiguration message.

That the MN generates (generate) an RRC reconfiguration message (RRCReconfiguration message, that is, the first reconfiguration message) may be as follows: The MN generates a CPC message based on the secondary node change required message sent by the S-SN to the MN and the secondary node addition request acknowledgment message sent by the candidate-SN to the MN, where the CPC message is an RRCReconfiguration message. The CPC message may include the S-SN-RRCReconfiguration sent by the S-SN to the MN. The S-SN-RRCReconfiguration includes a measurement ID. The CPC message also includes conditional primary secondary cell information (conditional PSCell information). The conditional primary secondary cell information may include one or more PSCell IDs (namely, IDs of one or more first candidate primary secondary cells accepted by the candidate-SN), and execution condition IDs corresponding to the one or more PSCell IDs, a T-SN-RRCReconfiguration message corresponding to the PSCell IDs, and an MN-RRCReconfiguration message corresponding to the one or more PSCell IDs. The MN-RRCReconfiguration message is new configuration information corresponding to the MN when the UE accesses a new PSCell. That the execution condition ID corresponds to the measurement ID in this step may be understood as the following: The execution condition ID and the measurement ID represent same content. Corresponding to the granularity of the first indication information, a granularity of the RRC reconfiguration message generated by the MN may also be per S-SN, per candidate-SN, or per PSCell.

1106: The MN sends the RRC reconfiguration message to the UE.

1107: The UE sends an RRC reconfiguration complete message to the MN.

The RRC reconfiguration complete message (RRCReconfiguration complete message) is used by the MN to confirm that the UE has successfully received the RRCReconfiguration message.

1108: The MN sends the first candidate primary secondary cell information to the S-SN.

The first candidate primary secondary cell information indicates the one or more first candidate primary secondary cells accepted by the candidate-SN in the candidate primary secondary cells that the S-SN requests the candidate-SN to add. The one or more first candidate primary secondary cells may be candidate primary secondary cells accepted by the candidate-SN, namely, accepted candidates. It can be learned that the first candidate primary secondary cell information may indicate specific PSCells that are accepted by the candidate-SN and specific PSCells that are rejected by the candidate-SN.

1109: The S-SN sends an updated source secondary node RRC reconfiguration message to the MN.

Step 1109 is optional rather than mandatory. If all the PSCells that the S-SN requests the candidate-SN to add are accepted and configured by the candidate-SN, this step is not performed. If a part of the PSCells that the S-SN requests the candidate-SN to add is configured, the S-SN sends the updated S-SN-RRCReconfiguration message to the MN. For example, initially, the S-SN configures a PSCell 1, a PSCell 2, and a PSCell 3 as candidate primary secondary cells, where the PSCell 1 and the PSCell 2 are intra-frequency cells, and PSCell 3 and PSCell 1 and PSCell 2 are inter-frequency cells. In this case, in step 1101, a measurement gap needs to be configured for the S-SN-RRCReconfiguration message. However, if the candidate-SN rejects the PSCell 3 and accepts the PSCell 1 and the PSCell 2, a measurement gap is not required for the intra-frequency cells, and the measurement gap is no longer configured for the S-SN-RRCReconfiguration message in step 1109.

1110: The MN sends the updated source secondary node RRC reconfiguration message to the UE.

1111: The UE sends an RRC reconfiguration complete message to the MN.

After successfully receiving the updated source secondary node RRC reconfiguration message from the MN, the UE sends RRCReconfigurationComplete to the MN.

1112: The MN sends an update confirm message to the S-SN.

The update confirm (update confirm) message notifies the S-SN that the new S-SN-RRCReconfiguration message is successfully received by the UE.

In this embodiment of this application, the first indication information indicates the MN to send the first reconfiguration message before the MN sends the first candidate primary secondary cell information to the S-SN. Based on the first indication information, the MN may first send the first reconfiguration message, and then send the first candidate primary secondary cell information, so that a CPC procedure can be normally performed. In addition, the MN first sends the first reconfiguration message, and then sends the first candidate primary secondary cell information, so that the candidate primary secondary cells can be updated for the UE more quickly.

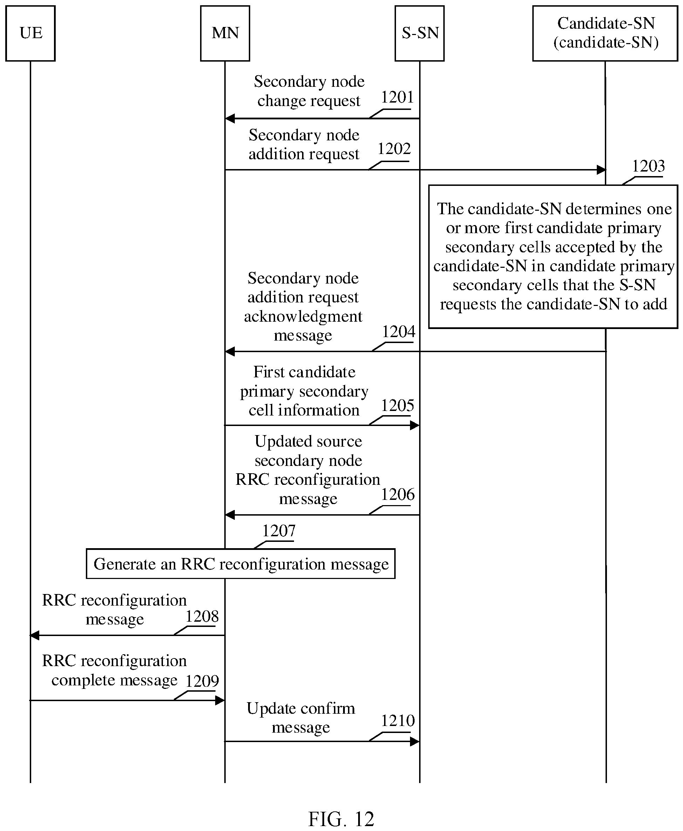

FIG. 12 is a flowchart of another communication method according to an embodiment of this application. A method procedure in FIG. 12 is a possible implementation of the method procedure in FIG. 4. In FIG. 12, an S-SN (source-SN, source-SN) may be the foregoing second access network device, namely, a current secondary node of UE; an MN may be the foregoing access network device 1, namely, a master node of the UE; and a candidate-SN may be the foregoing third access network device, namely, a T-SN of the UE. As shown in FIG. 12, the method procedure includes the following steps.

1201: The S-SN sends a secondary node change required message to the MN.

For step 1201, refer to step 1101.

In some implementations, the secondary node change required message includes the first indication information. The first indication information indicates the MN (namely, an access network device 1) to send a first reconfiguration message after the MN sends first candidate primary secondary cell information to the S-SN (namely, a second access network device).

1202: The MN sends, based on a candidate-SN ID, a secondary node addition request to a candidate-SN indicated by the MN.

For step 1202, refer to step 1102.

1203: The candidate-SN determines one or more first candidate primary secondary cells accepted by the candidate-SN in candidate primary secondary cells that the S-SN requests the candidate-SN to add.

For step 1203, refer to step 1103.

1204: The candidate-SN sends a secondary node addition request acknowledgment message to the MN.

For step 1204, refer to step 1104.

1205: The MN sends the first candidate primary secondary cell information to the S-SN.

For step 1205, refer to step 1108.

1206: The S-SN sends an updated source secondary node RRC reconfiguration message to the MN.

Step 1206 is optional rather than mandatory. For step 1206, refer to step 1109.

1207: The MN generates an RRC reconfiguration message.

For step 1207, refer to step 1105.

1208: The MN sends the RRC reconfiguration message to the UE.

For step 1208, refer to step 1106.

1209: The UE sends an RRC reconfiguration complete message to the MN.

For step 1209, refer to step 1107.

1210: The MN sends an update confirm message to the S-SN.

For step 1210, refer to step 1112.

In this embodiment of this application, the first indication information indicates the MN to send the first reconfiguration message after the MN sends the first candidate primary secondary cell information to the S-SN. Based on the first indication information, the MN may first send the first candidate primary secondary cell information, and then send the first reconfiguration message, so that a CPC procedure can be normally performed. Compared with that in the method procedure in FIG. 11, in the method procedure in FIG. 12, the MN needs to send the reconfiguration message to the UE only once, and therefore signaling overheads are low.

This application further provides a solution for enabling a network side to learn a reason for which a CPAC is not triggered in a scenario in which the UE triggers a CHO and does not trigger the conational primary secondary cell addition and change (conational PSCell addition and change, CPAC) CPAC. When the CPAC is used, the UE may add a PSCell and/or change a currently accessed PSCell based on candidate PSCells provided by the MN or the SN.

The following describes, with reference to the accompanying drawings, a solution that is provided in this application and that enables a network side to learn a reason for which a CPAC is not triggered.

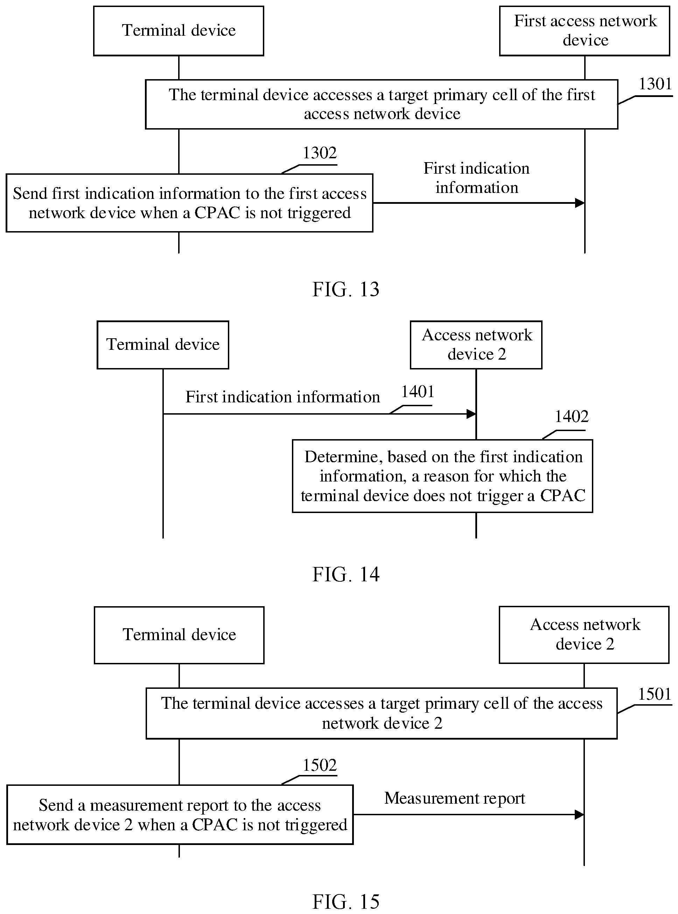

FIG. 13 is a flowchart of another communication method according to an embodiment of this application. As shown in FIG. 13, the method includes the following steps.

1301: UE accesses a target primary cell of a first access network device.

A possible implementation of step 1301 is as follows: The UE accesses the target primary cell of the first access network device (subsequently referred to as an access network device 2) when triggering a CHO. In other words, the UE accesses the target primary cell of the first access network device when meeting a primary cell handover (that is, triggering the CHO).

1302: The UE sends first indication information to the first access network device when the UE does not trigger a CPAC.

The first indication information (indication information 2) is used to determine a reason for which the UE does not trigger the CPAC.

The UE may be configured with a CHO trigger condition, and configuration information and a trigger condition (namely, CPAC configuration information) of one or more candidate PSCells.

In some implementations, when a source PCell (corresponding to a source master node) delivers CHO configuration information (used for CHO configuration) to the UE, each candidate PCell may include configuration information and a trigger condition (namely, CPAC configuration information) of at least one candidate PSCell that forms DC with a cell in at least one candidate PCell. The CHO is for handover of a PCell served by an MN, and the CPAC is for a change of a PSCell served by an SN. The CHO configuration information may be used to configure one or more CHOs (where each CHO corresponds to one or more candidate PCells), and the CPAC configuration information may be used to configure one or more CPACs (where each CPAC corresponds to one or more candidate PSCells). In addition, there is a correspondence between the one or more CHOs and the one or more CPACs. That each CHO corresponds to one or more candidate PCells means that the CHO is a trigger condition for switching the one or more candidate PCells to one or more PCells of the UE.

For example, the CHO configuration information is used to configure a CHO 1 (corresponding to a candidate PCell 1) and a CHO 2 (corresponding to a candidate PCell 2); and the CPAC configuration information is used to configure a CPAC 1 (corresponding to a candidate PSCell 1), a CPAC 2 (corresponding to a candidate PSCell 2), a CPAC 3 (corresponding to a candidate PSCell 3), and a CPAC 4 (corresponding to a candidate PSCell 4). The CHO 1 corresponds to the CPAC 1 and the CPAC 2, and the CHO 2 corresponds to the CPAC 3 and the CPAC 4. It should be understood that one CHO may correspond to one or more CPACs because one PCell may correspond to one or more candidate PSCells.

During CHO configuration, for a plurality of candidate PCells, PSCell-related configurations corresponding to the candidate PCells may be provided. In this way, if a candidate PCell triggers a CHO, the UE attempts to access a target PCell (namely, the target primary cell). In addition, if a PSCell associated with the target PCell also meets the CPAC trigger condition, the UE further attempts to perform a PSCell change (the PCell handover and the PSCell change as random access may be simultaneously performed, or may be successively performed).

In some implementations, when completing the CHO, the UE sends RRC signaling to the target PCell. The signaling may include cell information (such as a cell ID) and measurement information (such as signal strength and signal quality of a cell) of a candidate PSCell that meets the CPAC trigger condition, and is used for subsequent addition or change of a candidate PSCell.

In a possible implementation, the UE may further perform the following operation: The UE sends a measurement report to the access network device 2, where the measurement report is used by the access network device 2 to update a CPAC configuration. The measurement report is determined by the UE based on a latest received measurement configuration, and may include not only a measurement result of a candidate PSCell, but also a measurement result of a neighboring cell or another cell. A purpose of reporting the measurement report by the UE is to enable a target MN (namely, the access network device 2) to update the CPAC configuration, for example, a candidate PSCell and a handover threshold. A relatively long period of time may elapse between a moment at which the MN initially delivers the CHO configuration information and the CPAC configuration information to the UE and a moment at which the CHO succeeds. Therefore, the target MN needs to use a new measurement report to update the CPAC configuration. For example, the UE measures all candidate PSCells, but none of the candidate PSCells meets the CPAC trigger condition. This indicates that the trigger condition set for the CPAC is too strict. Therefore, some CPAC trigger thresholds may be reduced to make the CAPC easier to trigger, thereby achieving an optimization effect. For another example, if the access network device 2 finds, based on the measurement report, that signal quality of some neighboring cells is good, for example, higher than a preset threshold, the access network device 2 may add these neighboring cells to the CPAC configuration. For another example, if the access network device 2 finds, based on the measurement report, that cell signal quality of configured candidate PSCells is poor, for example, lower than the preset threshold, the access network device 2 may delete these candidate PSCells. When accessing the target MN, the UE directly reports a current measurement report to the target MN, so that time for the target MN to configure the CPAC can be shortened. Certainly, the target MN may alternatively optimize the CPAC configuration based on the measurement report. The UE may report a complete measurement report to the MN, or may report, to the MN, only a measurement report related to a PSCell associated with a PCell that triggers a CHO. For example, the measurement report includes a target parameter of each candidate primary secondary cell corresponding to the target primary cell. The target parameter includes one or more of the following: RSRP, RSRQ, and an SINR. The target parameter may be obtained by the UE through measurement when the UE determines whether a CPAC trigger condition is met.

In this embodiment of this application, when the UE does not trigger the CPAC, the UE sends the first indication information (referred to as indication information 2 in the following) to the access network device 2, so that the access network device 2 determines a reason for which the UE does not trigger the CPAC. The indication information 2 may enable the access network device 2 to learn more detailed information about why the CPAC is not triggered.

The following describes several possible implementations of the indication information 2.

In a possible implementation, the indication information 2 indicates that the UE has measured all candidate primary secondary cells corresponding to the target primary cell, and none of the candidate primary secondary cells corresponding to the target primary cell meets the CPAC trigger condition. In this implementation, the indication information 2 is an explicit indication, and the indication information 2 may include a pre-agreed field, for example, 111. In this implementation, the indication information 2 may enable the access network device 2 to learn that a reason for which the UE does not trigger the CPAC is that the UE has measured all the candidate primary secondary cells corresponding to the target primary cell, but none of the candidate primary secondary cells corresponding to the target primary cell meets the CPAC trigger condition. Subsequently, the access network device 2 may learn, based on the indication information 2, that the CPAC trigger condition may be configured high, and therefore, the access network device 2 optimizes the handover threshold.

In a possible implementation, the indication information 2 indicates that the UE fails to measure a candidate primary secondary cell corresponding to the target primary cell. In this implementation, the indication information 2 is an explicit indication, and the indication information 2 may include a preset field, for example, 000. In this implementation, the indication information 2 may enable the access network device 2 to learn that a reason for which the UE does not trigger the CPAC is that the UE fails to measure the candidate primary secondary cell corresponding to the target primary cell. Subsequently, the access network device 2 may learn, based on the indication information 2, that the configured candidate PSCell is faulty, and the access network device 2 may need to add a new PSCell or delete some or all of the configured PSCells.

In a possible implementation, the indication information 2 indicates that the UE has measured some candidate primary secondary cells corresponding to the target primary cell, and none of the candidate primary secondary cells that have been measured by the UE meets the CPAC trigger condition. In this implementation, the indication information 2 is an explicit indication, and the indication information 2 may include a pre-agreed field, for example, 010. In this implementation, the indication information 2 may enable the access network device 2 to learn that a reason for which the UE does not trigger the CPAC is that the UE has measured some candidate primary secondary cells corresponding to the target primary cell, but none of the candidate primary secondary cells that have been measured by the UE meets the CPAC trigger condition. Subsequently, the access network device 2 may deduce, based on the indication information 2, that the CPAC trigger condition may be configured high (for example, the handover threshold is high). In this way, the handover threshold may be optimized. Alternatively, the UE may not complete measurement, and an existing configuration may not be updated.

In a possible implementation, the indication information 2 indicates a measurement status of each candidate primary secondary cell corresponding to the target primary cell, and indicates that none of candidate primary secondary cells that have been measured by the UE meets the CPAC trigger condition. For example, four candidate PSCells, namely, PSCells 1, 2, 3, and 4, associated with the PCell are configured; and the indication information 2 reported by the UE includes: {the PSCell 1, measured, not meeting the CPAC}, {the PSCell 2, measured, not meeting the CPAC}, {the PSCell 3, measured, not meeting the CPAC}, and {the PSCell 4, measured, not meeting the CPAC}. For another example, four candidate PSCells, namely, PSCells 1, 2, 3, and 4, associated with the PCell are configured; and the indication information 2 reported by the UE includes: {the PSCell 1, not measured}, {the PSCell 2, not measured}, {the PSCell 3, not measured}, and {the PSCell 4, not measured}. For another example, four candidate PSCells, namely, PSCells 1, 2, 3, and 4, associated with the PCell are configured; and the indication information 2 reported by the UE includes: {the PSCell 1, measured, not meeting the CPAC}, {the PSCell 2, measured, not meeting the CPAC}, {the PSCell 3, not measured}, and {the PSCell 4, not measured}. In this implementation, the indication information 2 may enable the access network device 2 to learn of the measurement status of each candidate primary secondary cell corresponding to the target primary cell.

In a possible implementation, the indication information 2 indicates candidate primary secondary cells that have been measured by the UE and that are in the candidate primary secondary cells corresponding to the target primary cell, and indicates that none of the candidate primary secondary cells that have been measured by the UE meets the CPAC trigger condition. In this implementation, the UE reports, by using the indication information 2, only information related to the measured PSCells. However, reported PSCells are all PSCells configured by the network side for the PCell, and it shows that none of the reported PSCells meets the CPAC, which is an implicit indication. For example, four candidate PSCells, namely, PSCells 1, 2, 3, and 4, associated with the PCell are configured; and the indication information 2 reported by the UE includes: {the PSCell 1, measured, not meeting the CPAC}, {the PSCell 2, measured, not meeting the CPAC}, {the PSCell 3, measured, not meeting the CPAC}, and {the PSCell 4, measured, not meeting the CPAC}. Four PSCells are configured on the network side, and the UE also reports four PSCells. This implicitly indicates that all the PSCells have been measured, but none of the PSCells meets the CPAC condition. For another example, four candidate PSCells, namely, PSCells 1, 2, 3, and 4, are configured for the PCell. However, the UE does not report, by using the indication information 2, PSCell information related to the four configured candidate cells. This implicitly indicates that all the PSCells have been measured, but none of the PSCells meets the CPAC condition. For another example, four candidate PSCells, namely, PSCells 1, 2, 3, and 4, are configured for the PCell. However, the indication information 2 reported by the UE includes: {the PSCell 1, measured, not meeting the CPAC} and {the PSCell 2, measured, not meeting the CPAC}, and information related to the PSCells 3 and 4 is not reported. This indicates that the PSCells 3 and 4 are not measured.

FIG. 14 is a flowchart of another communication method according to an embodiment of this application. A method procedure in FIG. 14 corresponds to the method procedure in FIG. 13. FIG. 13 describes a method procedure performed by UE, and FIG. 14 describes a method procedure performed by an access network device. As shown in FIG. 14, the method includes the following steps.

1401: An access network device 2 receives indication information 2 from UE.

Step 1401 corresponds to step 1301 in FIG. 13.

1402: The access network device 2 determines, based on the indication information 2, a reason for which the UE does not trigger a CPAC.

In a possible implementation, the UE may further perform the following operation: The access network device 2 receives a measurement report from the UE, where the measurement report is used by the access network device 2 to update a CPAC configuration.

In this embodiment of this application, the access network device 2 determines, based on the indication information 2, the reason for which the UE does not trigger the CPAC, and further, the access network device 2 optimizes the CPAC configuration. A candidate PSCell may be deleted or added, to optimize the CPAC configuration. The indication information 2 may enable the access network device 2 to learn more detailed information about why the CPAC is not triggered.

FIG. 15 is a flowchart of another communication method according to an embodiment of this application. As shown in FIG. 15, the method includes the following steps.

1501: UE accesses a target primary cell of an access network device 2.

For step 1501, refer to step 1301.

1502: The UE sends a measurement report to the access network device 2 when the UE does not trigger a CPAC.

The measurement report is used by the access network device 2 to update a CPAC configuration. The measurement report in FIG. 15 is the same as the measurement report in the foregoing embodiment.

In this embodiment of this application, the UE sends the measurement report to the access network device 2 when the UE does not trigger the CPAC, so that the access network device 2 updates the CPAC configuration based on the measurement report.

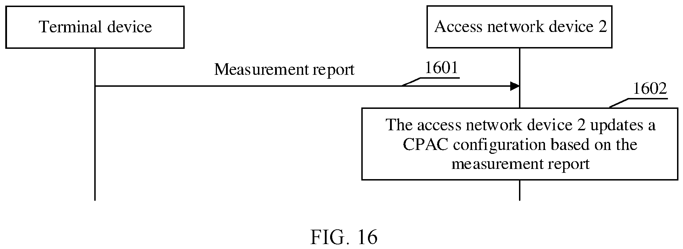

FIG. 16 is a flowchart of another communication method according to an embodiment of this application. A method procedure in FIG. 16 corresponds to the method procedure in FIG. 15. FIG. 15 describes a method procedure performed by UE, and FIG. 16 describes a method procedure performed by an access network device. As shown in FIG. 16, the method includes the following steps.

1601: An access network device 2 receives a measurement report from UE.

Step 1601 corresponds to step 1501.

1602: The access network device 2 updates a CPAC configuration based on the measurement report.

A possible implementation of step 1602 is as follows: Update, based on the measurement report, each candidate primary secondary cell corresponding to a target primary cell or a trigger threshold (or a handover threshold) of a CPAC. That the access network device 2 updates a CPAC configuration based on the measurement report may include one or more of the following: deleting a PSCell, adding a candidate PSCell, and updating the handover threshold.

In this embodiment of this application, the access network device 2 updates the CPAC configuration based on the measurement report. The CPAC configuration is updated, to better implement a primary secondary cell handover of the UE, and improve communication quality of the UE.

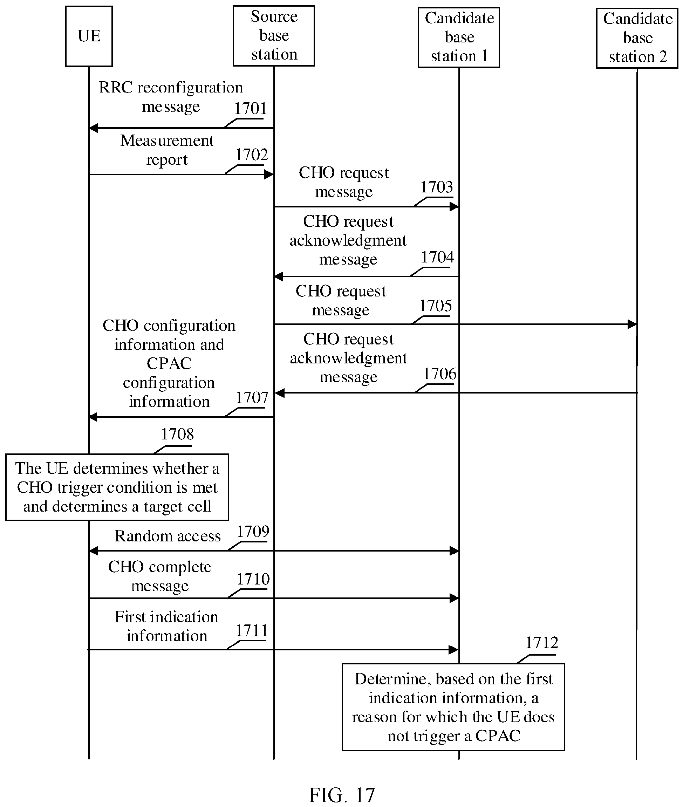

FIG. 17 is a flowchart of another communication method according to an embodiment of this application. A method procedure in FIG. 17 is the method described in FIG. 13 and FIG. 14. In FIG. 17, a source base station may be a master node currently connected to UE, and a candidate base station 1 may be the foregoing access network device 2. As shown in FIG. 17, the method includes the following steps.

1701: The source base station sends an RRC reconfiguration message to the UE in a connected state.

The source base station may be an access network device currently connected to the UE, the UE in the connected state may be the foregoing UE, and the RRC reconfiguration message may include parameters such as a measurement object, a report configuration, and a measurement identity.

1702: The UE sends a measurement report to the source base station.

A possible implementation of step 1702 is as follows: After measuring a series of cells based on the RRC reconfiguration message, the UE reports a formed measurement report to the currently connected source base station. For example, a signal strength of a current serving cell is lower than a threshold and a signal strength of a target cell is higher than the threshold.

1703: The source base station sends a CHO request message to the candidate base station 1.

The CHO request (CHO request) message is used to initiate a handover procedure. A CHO request message may carry information necessary for some candidate base stations (such as the candidate base station 1) to prepare for handover.

1704: The candidate base station 1 sends a CHO request acknowledgment message to the source base station.

The CHO request acknowledgment message (CHO request ACK) notifies the source base station that the candidate base station 1 has prepared handover configuration information. The source base station only needs to directly forward the RRC reconfiguration message in the CHO request acknowledgment message to the UE. The CHO request acknowledgment message may include information indicating that prepared UE can perform handover.

1705: The source base station sends a CHO request message to a candidate base station 2.

1706: The candidate base station 2 sends a CHO request acknowledgment message to the source base station.

FIG. 17 shows an operation that the source base station sends the CHO request message to the candidate base station 1 and the candidate base station 2, an operation that the candidate base station 1 sends the CHO request acknowledgment message to the source base station, and an operation that the candidate base station 2 sends the CHO request acknowledgment message to the source base station. It should be understood that the source base station may send a CHO request message to one or more candidate base stations, and each candidate base station may feed back a CHO request acknowledgment message after receiving the CHO request message. That the source base station sends the CHO request message to a plurality of candidate base stations is not limited in this application.

1707: The source base station sends CHO configuration information and CPAC configuration information to the UE.

The source base station may send one message to carry the CHO configuration information and the CPAC configuration information, or may send a plurality of messages to carry the CHO configuration information and the CPAC configuration information. For example, the source base station sends one message to the UE to carry the CHO configuration information, and sends another message to carry the CPAC configuration information. The CHO configuration information may include a CHO trigger condition and information about one or more candidate cells (for example, a CGI of the candidate cell, or a PCI of the candidate cell and frequency information corresponding to the candidate cell). The CPAC configuration information may be sent by any candidate base station to the source base station, or may be sent by a candidate base station corresponding to a candidate PSCell to the source base station, or may be sent in another manner. This is not limited in this embodiment of this application.

In some implementations, when delivering the CHO configuration information to the UE, the source base station may deliver configuration information and a trigger condition (namely, CPAC configuration information) of at least one candidate PSCell that forms DC with a cell in at least one candidate PCell.

1708: The UE determines whether the CHO trigger condition is met and determines a target cell.

The target cell is a primary cell that meets the CHO trigger condition. The UE is to be handed over to the target cell (a cell of the candidate base station 1). After receiving the CHO configuration information, the UE may measure, based on the CHO configuration information, whether cell quality of the candidate cells meets the CHO trigger condition. The UE uses a specific candidate cell that meets the CHO trigger condition as the target cell.

1709: The UE initiates random access to the candidate base station 1.

1710: The UE sends a CHO complete message to the candidate base station 1.

The CHO complete (CHO complete) message notifies the candidate base station 1 that the CHO is completed. The UE may send the CHO complete message to the candidate base station 1 after the random access is successfully completed.

1711: The UE sends indication information 2 to the candidate base station 1 when the UE does not trigger a CPAC.

The indication information 2 is used to determine a reason for which the UE does not trigger the CPAC.

If a PCell triggers a CHO, the UE attempts to access a target PCell (namely, the target cell). If a PSCell associated with the PCell also meets the CPAC trigger condition, the UE further attempts to perform a PSCell change (the PCell handover and the PSCell change as random access may be simultaneously performed, or may be successively performed, and are not limited). If none of PSCells associated with the PCell meets the CPAC trigger condition (that is, the CPAC is not triggered), the indication information 2 is sent to the candidate base station 1.

1712: The candidate base station 1 determines, based on the indication information 2, the reason for which the UE does not trigger the CPAC.

The candidate base station 1 may further update a CPAC configuration based on the indication information 2.

In some implementations, the UE may further send a measurement report to the candidate base station 1 when the UE does not trigger the CPAC. The measurement report is used by the access network device 2 to update a CPAC configuration.

In this embodiment of this application, when the UE does not trigger the CPAC, the UE sends the indication information 2 to the access network device 2, so that the access network device 2 determines the reason for which the UE does not trigger the CPAC. The first indication information may enable the access network device 2 to learn more detailed information about why the CPAC is not triggered.

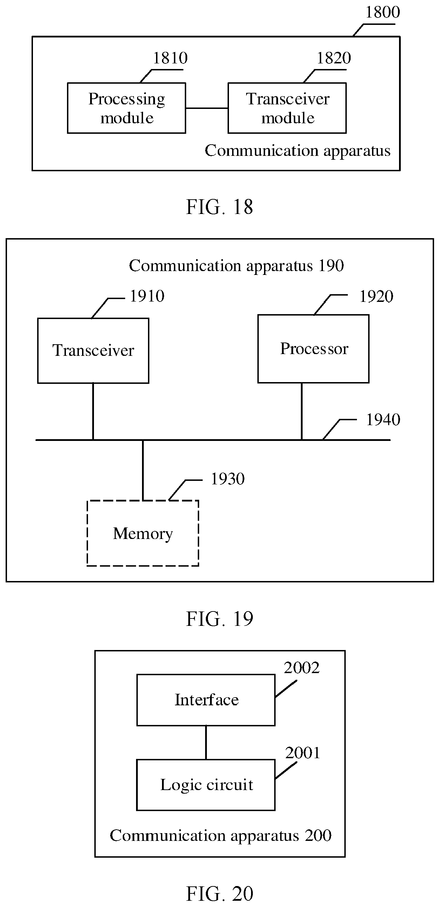

FIG. 18 is a schematic diagram of a structure of a communication apparatus 1800. The communication apparatus 1800 may correspondingly implement functions or steps implemented by the access network device (for example, the first access network device or the second access network device) in the foregoing method embodiments. The communication apparatus may include a processing module 1810 and a transceiver module 1820. Optionally, a storage unit may be further included. The storage unit may be configured to store instructions (code or a program) and/or data. The processing module 1810 and the transceiver module 1820 may be coupled to the storage unit. For example, the processing module 1810 may read the instructions (the code or the program) and/or the data in the storage unit, to implement a corresponding method. The foregoing units may be independently disposed, or may be partially or completely integrated. For example, the transceiver module 1820 may include a sending module and a receiving module.

In some possible implementations, the communication apparatus 1800 can correspondingly implement behavior and functions of the access network device 1 in the foregoing method embodiments. For example, the communication apparatus 1800 may be the access network device 1, or may be a component (for example, a chip or a circuit) used in the access network device 1. For example, the transceiver module 1820 may be configured to perform all receiving or sending operations performed by the access network device 1 (the MN in FIG. 11 and FIG. 12) in the embodiment in FIG. 4, FIG. 7, FIG. 8, FIG. 9, FIG. 10, FIG. 11, or FIG. 12. For example, the transceiver module 1820 is configured to perform step 401 and step 402 in the embodiment shown in FIG. 4 and step 701, step 702, and step 703 in the embodiment shown in FIG. 7, and/or is configured to support another process of the technology described in this specification. The processing module 1810 is configured to perform all operations, except the receiving and sending operations, performed by the access network device 1 in the embodiment in FIG. 4, FIG. 7, FIG. 8, FIG. 9, FIG. 10, FIG. 11, or FIG. 12.

In some possible implementations, the communication apparatus 1800 can correspondingly implement behavior and functions of the second access network device in the foregoing method embodiments. For example, the communication apparatus 1800 may be the second access network device, or may be a component (for example, a chip or a circuit) used in the second access network device. For example, the transceiver module 1820 may be configured to perform all receiving or sending operations performed by the second access network device (the S-ST in FIG. 11 and FIG. 12) in the embodiment in FIG. 4, FIG. 7, FIG. 8, FIG. 9, FIG. 10, FIG. 11, or FIG. 12. For example, the transceiver module 1820 is configured to perform step 401 in the embodiment shown in FIG. 4 and step 701 and step 702 in the embodiment shown in FIG. 7, and/or is configured to support another process of the technology described in this specification. The processing module 1810 is configured to perform all operations, except the receiving and sending operations, performed by the second access network device in the embodiment in FIG. 4, FIG. 7, FIG. 8, FIG. 9, FIG. 10, FIG. 11, or FIG. 12.

In some possible implementations, the communication apparatus 1800 can correspondingly implement behavior and functions of the terminal device in the foregoing method embodiments. For example, the communication apparatus 1800 may be the terminal device, or may be a component (for example, a chip or a circuit) used in the terminal device. For example, the transceiver module 1820 may be configured to perform all receiving or sending operations performed by the terminal device (the UE in FIG. 17) in the embodiment in FIG. 13, FIG. 14, FIG. 15, FIG. 16, or FIG. 17. For example, the transceiver module 1820 is configured to perform step 1302 in the embodiment shown in FIG. 13 and step 1401 in the embodiment shown in FIG. 14, and/or is configured to support another process of the technology described in this specification. The processing module 1810 is configured to perform all operations, except the receiving and sending operations, performed by the terminal device in the embodiment in FIG. 13, FIG. 14, FIG. 15, FIG. 16, or FIG. 17.

In some possible implementations, the communication apparatus 1800 can correspondingly implement behavior and functions of the access network device 2 in the foregoing method embodiments. For example, the communication apparatus 1800 may be the access network device 2, or may be a component (for example, a chip or a circuit) used in the access network device 2. For example, the transceiver module 1820 may be configured to perform all receiving or sending operations performed by the access network device 2 (the first access network device in FIG. 13 and the candidate base station 1 in FIG. 17) in the embodiment in FIG. 13, FIG. 14, FIG. 15, FIG. 16, or FIG. 17. For example, the transceiver module 1820 is configured to perform step 1302 in the embodiment shown in FIG. 13 and step 1401 in the embodiment shown in FIG. 14, and/or is configured to support another process of the technology described in this specification. The processing module 1810 is configured to perform all operations, except the receiving and sending operations, performed by the access network device 2 in the embodiment in FIG. 13, FIG. 14, FIG. 15, FIG. 16, or FIG. 17.

FIG. 19 is a schematic diagram of a structure of another communication apparatus 190 according to an embodiment of this application. The communication apparatus in FIG. 19 may be the foregoing terminal device. The communication apparatus in FIG. 19 may be the foregoing access network device 1. The communication apparatus in FIG. 19 may be the foregoing access network device 2. The communication apparatus in FIG. 19 may be the foregoing second access network device.

As shown in FIG. 19, a communication apparatus 190 includes at least one processor 1920 and a transceiver 1910.

In some other embodiments of this application, the processor 1920 and the transceiver 1910 may be configured to perform a function, an operation, or the like performed by the foregoing access network device 1. For example, the processor 1920 may perform one or more of the following operations: step 1105 in FIG. 11 and step 1207 in FIG. 12. For example, the transceiver 1910 may perform one or more of the following operations: step 401 and step 402 in FIG. 4; step 701, step 702, and step 703 in FIG. 7; step 801, step 802, and step 803 in FIG. 8; step 901, step 902, step 903, and step 904 in FIG. 9; step 1001, step 1002, and step 1003 in FIG. 10; step 1101, step 1102, step 1104, step 1106, step 1107, step 1108, step 1109, step 1110, step 1111, and step 1112 in FIG. 11; and step 1201, step 1202, step 1204, step 1205, step 1206, step 1208, step 1209, and step 1210 in FIG. 12.

In some embodiments of this application, the processor 1920 and the transceiver 1910 may be configured to perform a function, an operation, or the like performed by the foregoing second access network device. For example, the transceiver 1910 may perform one or more of the following operations: step 401 in FIG. 4; step 701 in FIG. 7; step 801 in FIG. 8; step 901 and step 903 in FIG. 9; step 1001 in FIG. 10; step 1101, step 1108, step 1109, and step 1112 in FIG. 11; and step 1201, step 1205, step 1206, and step 1210 in FIG. 12.

In some embodiments of this application, the processor 1920 and the transceiver 1910 may be configured to perform a function, an operation, or the like performed by the foregoing terminal device. For example, the processor 1920 may perform one or more of the following operations: step 1301 in FIG. 13; step 1501 in FIG. 15; and step 1708 and step 1709 in FIG. 17. The transceiver 1910 may perform one or more of the following operations: step 1302 in FIG. 13; step 1401 in FIG. 14; step 1502 in FIG. 15; step 1601 in FIG. 16; and step 1701, step 1702, step 1707, step 1710, and step 1711 in FIG. 17.

In some other embodiments of this application, the processor 1920 and the transceiver 1910 may be configured to perform a function, an operation, or the like performed by the foregoing access network device 2. For example, the processor 1920 may perform step 1301 in FIG. 13, step 1402 in FIG. 14, step 1501 in FIG. 15, step 1602 in FIG. 16, and step 1709 and step 1712 in FIG. 17. The transceiver 1910 may perform one or more of the following operations: step 1302 in FIG. 13; step 1401 in FIG. 14; step 1502 in FIG. 15; step 1601 in FIG. 16; and step 1703, step 1704, step 1710, and step 1711 in FIG. 17.

The transceiver 1910 is configured to communicate with another device/apparatus through a transmission medium. The processor 1920 receives and sends data and/or signaling by using the transceiver 1910, and is configured to implement the method in the foregoing method embodiments. The processor 1920 may implement a function of the processing module 1810, and the transceiver 1910 may implement a function of the transceiver module 1820.

Optionally, the communication apparatus 190 may further include at least one memory 1930, configured to store program instructions and/or data. The memory 1930 is coupled to the processor 1920. The coupling in this embodiment of this application may be an indirect coupling or a communication connection between apparatuses, units, or modules in an electrical form, a mechanical form, or another form, and is used for information exchange between the apparatuses, the units, or the modules. The processor 1920 may cooperate with the memory 1930. The processor 1920 may execute the program instructions stored in the memory 1930. At least one of the at least one memory may be included in a processor.

A specific connection medium between the transceiver 1910, the processor 1920, and the memory 1930 is not limited in this embodiment of this application. In this embodiment of this application, in FIG. 19, the memory 1930, the processor 1920, and the transceiver 1910 are connected through a bus 1940. The bus is represented by a bold line in FIG. 19. A connection manner between other components is merely a schematic description, and is not limited thereto. The bus may be classified into an address bus, a data bus, a control bus, and the like. For ease of representation, only one bold line is used for representation in FIG. 19, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or a transistor logic device, or a discrete hardware component, so that the methods, steps, and logical block diagrams that are disclosed in embodiments of this application can be implemented or performed. The general-purpose processor may be a microprocessor or any conventional processor or the like. The steps of the method disclosed with reference to embodiments of this application may be directly performed by a hardware processor, or may be performed by using a combination of hardware in the processor and a software module.

FIG. 20 is a schematic diagram of a structure of another communication apparatus 200 according to an embodiment of this application. As shown in FIG. 20, the communication apparatus shown in FIG. 20 includes a logic circuit 2001 and an interface 2002. The processing module 1810 in FIG. 18 may be implemented through the logic circuit 2001, and the transceiver module 1820 in FIG. 18 may be implemented through the interface 2002. The logic circuit 2001 may be a chip, a processing circuit, an integrated circuit, a system-on-a-chip (system-on-a-chip, SoC), or the like, and the interface 2002 may be a communication interface, an input/output interface, or the like. In this embodiment of this application, the logic circuit and the interface may be further coupled to each other. A specific manner of connection between the logic circuit and the interface is not limited in this embodiment of this application.

In some embodiments of this application, the logic circuit and the interface may be configured to perform a function, an operation, or the like performed by the foregoing access network device 1.

In some other embodiments of this application, the logic circuit and the interface may be configured to perform a function, an operation, or the like performed by the foregoing second access network device.

In some other embodiments of this application, the logic circuit and the interface may be configured to perform a function, an operation, or the like performed by the foregoing terminal device.

In some embodiments of this application, the logic circuit and the interface may be configured to perform a function, an operation, or the like performed by the foregoing access network device 2.

This application further provides a computer-readable storage medium. The computer-readable storage medium stores computer code. When the computer code is run on a computer, the computer is enabled to perform the method in the foregoing embodiments.

This application further provides a computer program product. The computer program product includes computer code or a computer program. When the computer code or the computer program is run on a computer, the authentication method in the foregoing embodiments is performed.

This application further provides a communication system, including a terminal device, an access network device 1, a second access network device, and a third access network device.

This application further provides a communication system, including a terminal device and an access network device 2.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first access network device, first indication information from a second access network device, wherein the first indication information indicates the first access network device to send a first reconfiguration message after or before the first access network device sends first candidate primary secondary cell information to the second access network device, and the first candidate primary secondary cell information indicates one or more first candidate primary secondary cells accepted by a third access network device in candidate primary secondary cells that the second access network device requests the third access network device to add; and
sending, by the first access network device, the first reconfiguration message to a terminal device based on the first indication information, wherein the first reconfiguration message comprises configuration information corresponding to the one or more first candidate primary secondary cells.

2. The method according to claim 1, wherein the first indication information comprises an indication field, and
the indication field indicates the first access network device to send the first reconfiguration message after the first access network device sends the first candidate primary secondary cell information to the second access network device, and the indication field further indicates the first access network device to send a second reconfiguration message after the first access network device sends second candidate primary secondary cell information to the second access network device; the second candidate primary secondary cell information indicates one or more second candidate primary secondary cells accepted by a fourth access network device in candidate primary secondary cells that the second access network device requests the fourth access network device to add; and the second reconfiguration message comprises configuration information corresponding to the one or more second candidate primary secondary cells; or
the indication field indicates the first access network device to send the first reconfiguration message before the first access network device sends the first candidate primary secondary cell information to the second access network device, and the indication field further indicates the first access network device to send a second reconfiguration message before the first access network device sends second candidate primary secondary cell information to the second access network device; the second candidate primary secondary cell information indicates one or more second candidate primary secondary cells accepted by a fourth access network device in candidate primary secondary cells that the second access network device requests the fourth access network device to add; and the second reconfiguration message comprises configuration information corresponding to the one or more second candidate primary secondary cells.

3. The method according to claim 1 or 2, wherein the first indication information comprises an identity of the third access network device and/or identities of the one or more first candidate primary secondary cells.

4. The method according to claim 2, wherein the first indication information comprises an identity of the third access network device and/or identities of the one or more first candidate primary secondary cells; and
the first indication information comprises an identity of the fourth access network device and/or identities of the one or more second candidate primary secondary cells.

5. The method according to claim 1, wherein the first indication information comprises a first field and a second field; the first field corresponds to an identity of the third access network device and/or identities of the one or more first candidate primary secondary cells; the second field corresponds to an identity of a fourth access network device and/or identities of one or more second candidate primary secondary cells; the first field indicates the first access network device to send the first reconfiguration message before or after the first access network device sends the first candidate primary secondary cell information to the second access network device; and the second field indicates the first access network device to send a second reconfiguration message before or after the first access network device sends second candidate primary secondary cell information to the second access network device; and
the second candidate primary secondary cell information indicates the one or more second candidate primary secondary cells, and the one or more second candidate primary secondary cells are one or more candidate primary secondary cells accepted by the fourth access network device in candidate primary secondary cells that the second access network device requests the fourth access network device to add; and the second reconfiguration message comprises configuration information corresponding to the one or more second candidate primary secondary cells.

6. The method according to claim 1, wherein the first indication information comprises a third field and a fourth field, the third field corresponds to identities of the one or more first candidate primary secondary cells, and the fourth field corresponds to identities of one or more third candidate primary secondary cells; and
the third field indicates the first access network device to send the first reconfiguration message after the first access network device sends the first candidate primary secondary cell information to the second access network device; the fourth field indicates the first access network device to send a third reconfiguration message corresponding to the one or more third candidate primary secondary cells before the first access network device sends, to the second access network device, third candidate primary secondary cell information corresponding to the one or more third candidate primary secondary cells; and the one or more third candidate primary secondary cells belong to one or more access network devices.

7. The method according to claim 6, wherein the third field further corresponds to identities of one or more fourth candidate primary secondary cells; the third field further indicates the first access network device to send a fourth reconfiguration message corresponding to the one or more fourth candidate primary secondary cells after the first access network device sends, to the second access network device, fourth candidate primary secondary cell information corresponding to the one or more fourth candidate primary secondary cells; and the one or more fourth candidate primary secondary cells belong to one or more access network devices.

8. The method according to claim 1, wherein the first indication information comprises a third field and a fourth field, the third field corresponds to identities of the one or more first candidate primary secondary cells, and the fourth field corresponds to identities of one or more third candidate primary secondary cells; and
the third field indicates the first access network device to send the first reconfiguration message before the first access network device sends the first candidate primary secondary cell information to the second access network device; the fourth field indicates the first access network device to send a third reconfiguration message corresponding to the one or more third candidate primary secondary cells after the first access network device sends, to the second access network device, third candidate primary secondary cell information corresponding to the one or more third candidate primary secondary cells; and the one or more third candidate primary secondary cells correspond to one or more access network devices.

9. The method according to claim 8, wherein the third field further corresponds to identities of one or more fourth candidate primary secondary cells; the third field further indicates the first access network device to send a fourth reconfiguration message corresponding to the one or more fourth candidate primary secondary cells before the first access network device sends, to the second access network device, fourth candidate primary secondary cell information corresponding to the one or more fourth candidate primary secondary cells; and the one or more fourth candidate primary secondary cells belong to one or more access network devices.

10. The method according to claim 1, wherein the first candidate primary secondary cell information indicates one first candidate primary secondary cell accepted by the third access network device in the candidate primary secondary cells that the second access network device requests the third access network device to add; the first reconfiguration message comprises configuration information corresponding to the one first candidate primary secondary cell; and the first indication information comprises a fifth field, the fifth field corresponds to an identity of the one first candidate primary secondary cell, and the fifth field indicates the first access network device to send the first reconfiguration message before or after the first access network device sends the first candidate primary secondary cell information to the second access network device.

11. The method according to any one of claims 6 to 9, wherein the first indication information further comprises an identity of the third access network device, and the identities of the one or more first candidate primary secondary cells correspond to the identity of the third access network device.

12. The method according to any one of claims 1 to 11, wherein the first indication information is comprised in a secondary node change required message.

13. The method according to any one of claims 1 to 11, wherein the method further comprises:
when receiving no second indication information from the second access network device, sending, by the first access network device, a fifth reconfiguration message to the terminal device based on the received first indication information, wherein the second indication information indicates the first access network device to send the fifth reconfiguration message after or before the first access network device sends fifth candidate primary secondary cell information to the second access network device; the fifth candidate primary secondary cell information indicates one or more fifth candidate primary secondary cells accepted by a fifth access network device in candidate primary secondary cells that the second access network device requests the fifth access network device to add; and the fifth reconfiguration message comprises configuration information corresponding to the one or more fifth candidate primary secondary cells.

14. A communication method, comprising:
sending, by a second access network device, first indication information to a first access network device, wherein the first indication information indicates the first access network device to send a first reconfiguration message after or before the first access network device sends first candidate primary secondary cell information to the second access network device; and the first candidate primary secondary cell information indicates one or more first candidate primary secondary cells accepted by a third access network device in candidate primary secondary cells that the second access network device requests the third access network device to add; and
receiving, by the second access network device, the first candidate primary secondary cell information from the first access network device.

15. The method according to claim 14, wherein the first indication information comprises an indication field, and
the indication field indicates the first access network device to send the first reconfiguration message after the first access network device sends the first candidate primary secondary cell information to the second access network device, and the indication field further indicates the first access network device to send a second reconfiguration message after the first access network device sends second candidate primary secondary cell information to the second access network device; the second candidate primary secondary cell information indicates one or more second candidate primary secondary cells accepted by a fourth access network device in candidate primary secondary cells that the second access network device requests the fourth access network device to add; and the second reconfiguration message comprises configuration information corresponding to the one or more second candidate primary secondary cells; or
the indication field indicates the first access network device to send the first reconfiguration message before the first access network device sends the first candidate primary secondary cell information to the second access network device, and the indication field further indicates the first access network device to send a second reconfiguration message before the first access network device sends second candidate primary secondary cell information to the second access network device; the second candidate primary secondary cell information indicates one or more second candidate primary secondary cells accepted by a fourth access network device in candidate primary secondary cells that the second access network device requests the fourth access network device to add; and the second reconfiguration message comprises configuration information corresponding to the one or more second candidate primary secondary cells.

16. The method according to claim 14 or 15, wherein the first indication information comprises an identity of the third access network device and/or identities of the one or more first candidate primary secondary cells.

17. The method according to claim 15, wherein the first indication information comprises an identity of the third access network device and/or identities of the one or more first candidate primary secondary cells; and
the first indication information comprises an identity of the fourth access network device and/or identities of the one or more second candidate primary secondary cells.

18. The method according to claim 14, wherein the first indication information comprises a first field and a second field; the first field corresponds to an identity of the third access network device and/or identities of the one or more first candidate primary secondary cells; the second field corresponds to an identity of a fourth access network device and/or identities of one or more second candidate primary secondary cells; the first field indicates the first access network device to send the first reconfiguration message before or after the first access network device sends the first candidate primary secondary cell information to the second access network device; and the second field indicates the first access network device to send a second reconfiguration message before or after the first access network device sends second candidate primary secondary cell information to the second access network device; and
the second candidate primary secondary cell information indicates the one or more second candidate primary secondary cells, and the one or more second candidate primary secondary cells are one or more candidate primary secondary cells accepted by the fourth access network device in candidate primary secondary cells that the second access network device requests the fourth access network device to add; and the second reconfiguration message comprises configuration information corresponding to the one or more second candidate primary secondary cells.

19. The method according to claim 14, wherein the first indication information comprises a third field and a fourth field, the third field corresponds to identities of the one or more first candidate primary secondary cells, and the fourth field corresponds to identities of one or more third candidate primary secondary cells; and
the third field indicates the first access network device to send the first reconfiguration message after the first access network device sends the first candidate primary secondary cell information to the second access network device; the fourth field indicates the first access network device to send a third reconfiguration message corresponding to the one or more third candidate primary secondary cells before the first access network device sends, to the second access network device, third candidate primary secondary cell information corresponding to the one or more third candidate primary secondary cells; and the one or more third candidate primary secondary cells belong to one or more access network devices.

20. The method according to claim 19, wherein the third field further corresponds to identities of one or more fourth candidate primary secondary cells; the third field further indicates the first access network device to send a fourth reconfiguration message corresponding to the one or more fourth candidate primary secondary cells after the first access network device sends, to the second access network device, fourth candidate primary secondary cell information corresponding to the one or more fourth candidate primary secondary cells; and the one or more fourth candidate primary secondary cells belong to one or more access network devices.

21. The method according to claim 14, wherein the first indication information comprises a third field and a fourth field, the third field corresponds to identities of the one or more first candidate primary secondary cells, and the fourth field corresponds to identities of one or more third candidate primary secondary cells; and
the third field indicates the first access network device to send the first reconfiguration message before the first access network device sends the first candidate primary secondary cell information to the second access network device; the fourth field indicates the first access network device to send a third reconfiguration message corresponding to the one or more third candidate primary secondary cells after the first access network device sends, to the second access network device, third candidate primary secondary cell information corresponding to the one or more third candidate primary secondary cells; and the one or more third candidate primary secondary cells correspond to one or more access network devices.

22. The method according to claim 21, wherein the third field further corresponds to identities of one or more fourth candidate primary secondary cells; the third field further indicates the first access network device to send a fourth reconfiguration message corresponding to the one or more fourth candidate primary secondary cells before the first access network device sends, to the second access network device, fourth candidate primary secondary cell information corresponding to the one or more fourth candidate primary secondary cells; and the one or more fourth candidate primary secondary cells belong to one or more access network devices.

23. The method according to claim 14, wherein the first candidate primary secondary cell information indicates one first candidate primary secondary cell accepted by the third access network device in the candidate primary secondary cells that the second access network device requests the third access network device to add; the first reconfiguration message comprises configuration information corresponding to the one first candidate primary secondary cell; and the first indication information comprises a fifth field, the fifth field corresponds to an identity of the one first candidate primary secondary cell, and the fifth field indicates the first access network device to send the first reconfiguration message before or after the first access network device sends the first candidate primary secondary cell information to the second access network device.

24. The method according to any one of claims 19 to 21, wherein the first indication information further comprises an identity of the third access network device, and the identities of the one or more first candidate primary secondary cells correspond to the identity of the third access network device.

25. The method according to any one of claims 14 to 24, wherein the first indication information is comprised in a secondary node change required message.

26. A communication apparatus, comprising a module configured to implement the method according to any one of claims 1 to 25.

27. A communication apparatus, comprising a processor and a transceiver, wherein
the transceiver is configured to receive a signal or send a signal, and the processor is configured to execute computer-executable instructions stored in a memory, to enable the communication apparatus to perform the method according to any one of claims 1 to 25.

28. A computer-readable storage medium, wherein the computer-readable storage medium stores a computer program, the computer program comprises program instructions, and when the program instructions are executed by a processor, the processor is enabled to perform the method according to any one of claims 1 to 25.

29. A communication method, comprising:
accessing, by a terminal device, a target primary cell of a first access network device; and
sending, by the terminal device, first indication information to the first access network device when the terminal device does not trigger a conditional primary secondary cell addition and change CPAC, wherein the first indication information is used to determine a reason for which the terminal device does not trigger the CPAC.

30. The method according to claim 29, wherein the method further comprises: sending, by the terminal device, a measurement report to the first access network device, wherein the measurement report is used by the first access network device to update a CPAC configuration.

31. The method according to claim 30, wherein the measurement report is related to each candidate primary secondary cell corresponding to the target primary cell.

32. The method according to claim 30, wherein the measurement report comprises a target parameter of each candidate primary secondary cell corresponding to the target primary cell, and the target parameter comprises one or more of the following: reference signal received power RSRP, reference signal received quality RSRQ, and a signal to interference plus noise ratio SINR.

33. The method according to claim 32, wherein the target parameter is obtained by the terminal device through measurement when the terminal device determines whether a CPAC trigger condition is met.

34. The method according to any one of claims 29 to 33, wherein the first indication information indicates that the terminal device has measured all candidate primary secondary cells corresponding to the target primary cell, and none of the candidate primary secondary cells corresponding to the target primary cell meets the CPAC trigger condition.

35. The method according to any one of claims 29 to 33, wherein the first indication information indicates that the terminal device fails to measure the candidate primary secondary cell corresponding to the target primary cell.

36. The method according to any one of claims 29 to 33, wherein the first indication information indicates that the terminal device has measured some candidate primary secondary cells corresponding to the target primary cell, and none of the candidate primary secondary cells that have been measured by the terminal device meets the CPAC trigger condition.

37. The method according to any one of claims 29 to 33, wherein the first indication information indicates a measurement status of each candidate primary secondary cell corresponding to the target primary cell, and indicates that none of candidate primary secondary cells that have been measured by the terminal device meets the CPAC trigger condition.

38. The method according to any one of claims 29 to 33, wherein the first indication information indicates candidate primary secondary cells measured by the terminal device in the candidate primary secondary cells corresponding to the target primary cell, and indicates that none of the candidate primary secondary cells that have been measured by the terminal device meets the CPAC trigger condition.

39. A communication method, comprising:
receiving, by a first access network device, first indication information from a terminal device; and
determining, by the first access network device based on the first indication information, a reason for which the terminal device does not trigger a CPAC.

40. The method according to claim 39, wherein the first access network device receives a measurement report from the terminal device, and the measurement report is used by the first access network device to update a CPAC configuration.

41. The method according to claim 40, wherein the measurement report is related to each candidate primary secondary cell corresponding to the target primary cell.

42. The method according to claim 40, wherein the measurement report comprises a target parameter of each candidate primary secondary cell corresponding to the target primary cell, and the target parameter comprises one or more of the following: reference signal received power RSRP, reference signal received quality RSRQ, and a signal to interference plus noise ratio SINR.

43. The method according to claim 42, wherein the target parameter is obtained by the terminal device through measurement when the terminal device determines whether a CPAC trigger condition is met.

44. The method according to any one of claims 39 to 43, wherein the first indication information indicates that the terminal device has measured all candidate primary secondary cells corresponding to the target primary cell, and none of the candidate primary secondary cells corresponding to the target primary cell meets the CPAC trigger condition.

45. The method according to any one of claims 39 to 43, wherein the first indication information indicates that the terminal device fails to measure the candidate primary secondary cell corresponding to the target primary cell.

46. The method according to any one of claims 39 to 43, wherein the first indication information indicates that the terminal device has measured some candidate primary secondary cells corresponding to the target primary cell, and none of the candidate primary secondary cells that have been measured by the terminal device meets the CPAC trigger condition.

47. The method according to any one of claims 39 to 43, wherein the first indication information indicates a measurement status of each candidate primary secondary cell corresponding to the target primary cell, and indicates that none of candidate primary secondary cells that have been measured by the terminal device meets the CPAC trigger condition.

48. The method according to any one of claims 39 to 43, wherein the first indication information indicates candidate primary secondary cells measured by the terminal device in the candidate primary secondary cells corresponding to the target primary cell, and indicates that none of the candidate primary secondary cells that have been measured by the terminal device meets the CPAC trigger condition.

49. A communication method, comprising:
accessing, by a terminal device, a target primary cell of a first access network device; and
sending, by the terminal device, a measurement report to the first access network device when the terminal device does not trigger a conditional primary secondary cell addition and change CPAC, wherein the measurement report is used by the first access network device to update a CPAC configuration.

50. The method according to claim 49, wherein the measurement report is related to each candidate primary secondary cell corresponding to the target primary cell.

51. The method according to claim 49, wherein the measurement report comprises a target parameter of each candidate primary secondary cell corresponding to the target primary cell, and the target parameter comprises one or more of the following: reference signal received power RSRP, reference signal received quality RSRQ, and a signal to interference plus noise ratio SINR.

52. The method according to claim 51, wherein the target parameter is obtained by the terminal device through measurement when the terminal device determines whether a CPAC trigger condition is met.

53. A communication method, comprising:
receiving, by a first access network device, a measurement report from a terminal device; and
updating a CPAC configuration based on the measurement report.

54. The method according to claim 53, wherein the measurement report comprises a target parameter of each candidate primary secondary cell corresponding to the target primary cell, and the target parameter comprises one or more of the following: reference signal received power RSRP, reference signal received quality RSRQ, and a signal to interference plus noise ratio SINR.

55. The method according to claim 54, wherein the target parameter is obtained by the terminal device through measurement when the terminal device determines whether a CPAC trigger condition is met.

56. The method according to any one of claims 53 to 55, wherein the updating a CPAC configuration based on the measurement report comprises: updating, based on the measurement report, a CPAC trigger threshold or each candidate primary secondary cell corresponding to the target primary cell.

57. A communication apparatus, comprising a module configured to implement the method according to any one of claims 29 to 38, or comprising a module configured to implement the method according to any one of claims 39 to 48, or comprising a module configured to implement the method according to any one of claims 49 to 52, or comprising a module configured to implement the method according to any one of claims 53 to 56.

58. A communication apparatus, comprising a processor and a transceiver, wherein
the transceiver is configured to receive a signal or send a signal, and the processor is configured to execute computer-executable instructions stored in a memory, to enable the communication apparatus to perform the method according to any one of claims 29 to 38, or the communication apparatus performs the method according to any one of claims 39 to 48, or the communication apparatus performs the method according to any one of claims 49 to 52, or the communication apparatus performs the method according to any one of claims 53 to 56.

59. A computer-readable storage medium, wherein the computer-readable storage medium stores a computer program, the computer program comprises program instructions, and when the program instructions are executed by a processor, the processor is enabled to perform the method according to any one of claims 29 to 38, or the processor is enabled to perform the method according to any one of claims 39 to 48, or the processor is enabled to perform the method according to any one of claims 49 to 52, or the processor is enabled to perform the method according to any one of claims 53 to 56.

60. A communication system, comprising a communication apparatus configured to implement the method according to any one of claims 1 to 13, and a communication apparatus configured to implement the method according to any one of claims 14 to 25, or comprising a communication apparatus configured to implement the method according to any one of claims 29 to 38, and a communication apparatus configured to implement the method according to any one of claims 39 to 48, or comprising a communication apparatus configured to implement the method according to any one of claims 49 to 52, and a communication apparatus configured to implement the method according to any one of claims 53 to 56.
